# EUROPEAN PATENT SPECIFICATION

(11) **EP 3 064 762 B1**
(45) Date of publication and mention of the grant of the patent: **07.07.2021**
(21) Application number: 14870978.5
(22) Date of filing: 18.12.2014
(51) Int. Cl.: F02N 11/08, F02N 19/00, F02N 11/04, H02K 29/12, H02K 7/14, H02K 11/04, H02P 21/32, F02D 29/02, H02K 21/22

(54) **STRADDLED VEHICLE WITH ENGINE UNIT**
GRÄTSCHSITZFAHRZEUG MIT MOTOREINHEIT
VÉHICULE À ENFOURCHER AVEC ENSEMBLE MOTEUR

(30) Priority: 20.12.2013 JP 2013263309; 20.12.2013 JP 2013263308
(43) Date of publication of application: 07.09.2016
(73) Proprietor: Yamaha Hatsudoki Kabushiki Kaisha, Iwata-shi, Shizuoka 438-8501 (JP)
(72) Inventor: NISHIKAWA, Takahiro, Iwata-shi Shizuoka 438-8501 (JP); HINO, Haruyoshi, Iwata-shi Shizuoka 438-8501 (JP)
(74) Representative: Zimmermann, Tankred Klaus
(86) International application number: PCT/JP2014/083593
(87) International publication number: WO 2015/093576

(56) References cited:
- DE-T2- 60 112 349
- JP-A- H02 216 323
- JP-A- 2001 193 540
- JP-A- 2004 068 632
- JP-A- 2004 068 632
- JP-A- 2004 251 252
- JP-A- 2004 251 252
- JP-A- 2005 163 718
- US-A1- 2009 115 362
- US-A1- 2011 187 308
- None

## Description

The present invention relates to an engine unit including a four-stroke engine body in which a high-load region and a low-load region occur during four strokes, and also relates to a vehicle equipped with the engine unit.

### Background Art

Types of engines mounted to vehicles include a four-stroke engine (for example, a single-cylinder engine) having, during four strokes, a high-load region in which a high load is put on rotation of a crankshaft of the engine and a low-load region in which a low load is put on rotation of the crankshaft. Such a four-stroke engine requires that a starter motor generate a high output torque for enabling the crankshaft to rotate beyond the high-load region at a time of engine start. To obtain a high output torque from the starter motor, however, the size of the starter motor has to be increased, which leads to deterioration in mountability of the engine unit to a vehicle. Improvement in mountability of the engine unit to a vehicle is under demand.

Patent Literature 1 (PTL1) discloses an engine starter that starts an engine by driving a crankshaft once in reverse rotation, then stopping the crankshaft, and then driving the crankshaft in forward rotation. The engine, which is started by the engine starter as shown in the Patent Literature 1, stops combustion if a combustion stop instruction is received during its operation. After the combustion is stopped, the crankshaft makes freewheeling rotation four to eight times. When the crankshaft can no longer overcome the peak of a load caused by a reaction force of compression in the compression stroke, the crankshaft turns into reverse rotation due to the reaction force of compression, and then stops.

The engine starter of the Patent Literature 1 is configured to, after rotation of the crankshaft stops, drive the crankshaft in reverse rotation up to a position where a load increase occurs, that is, up to a position in the middle of an expansion stroke. Subsequently, the engine starter causes motoring of a motor in a forward rotation direction, to drive the crankshaft in forward rotation. Since the crankshaft has been driven in reverse rotation up to the position where a load increase occurs, that is, up to the position in the middle of the expansion stroke; the crankshaft rotates in forward rotation through a low-load region ranging from the position in the middle of the expansion stroke to the compression stroke, and then reaches the high-load region for the first time. This enables the engine starter to increase the rotation speed of the crankshaft before the crankshaft reaches the high-load region for the first time. Both a high inertial force generated by such a high rotation speed and an output torque of the starter motor can be used to overcome the high-load region encountered for the first time. This is how the engine starter disclosed in the Patent Literature 1 aims to achieve improved mountability to vehicle by using both the high inertial force generated by the high rotation speed and the output torque of the motor to overcome the high-load region encountered for the first time.

Patent Literature 2 describes an internal combustion engine having a crankshaft connected to a wheel and via a transmission belt to an electro motor/generator. The motor/generator and the engine are controlled by the control unit. A load-torque is high in the compression stroke region of the engine and is low in the region outside thereof. The motor/ generator is controlled in order to stop the engine with its crankshaft at a desired angle in the compression stroke. When the output shaft of the motor/generator is stopped and the desired angle in the compression stroke is not achieved, motoring the engine by activating the motor/generator, after stopping the engine, is performed and the control to stop the engine in the desired position is perform again.

### Citation List

### Patent Literature

PTL1: Japanese Patent Application Laid-Open No. 2003-343404 (or official language patent family member EP 1 365 145 A2)
PTL2: Japanese Patent Application Laid-Open No. 2004-068632

### Summary of Invention

### Technical Problem

The engine starter of the Patent Literature 1 starts the forward rotation of the crankshaft from the position in the middle of the expansion stroke. That is, the expansion stroke is not fully utilized for the forward rotation of the crankshaft. As a consequence, the engine starter of the Patent Literature 1 utilizes only part of the low-load region for the forward rotation of the crankshaft when the crankshaft rotates in forward direction. The engine starter of the Patent Literature 1 still leaves room for improvement from the viewpoint of mountability to vehicle.

An engine unit including a four-stroke engine body in which a high-load region and a low-load region occur during four strokes has been desired to achieve further improvement in mountability to vehicle.

Considering Patent Literature 1, the present invention provides a straddled vehicle equipped with an engine unit including a four-stroke engine body in which a high-load region and a low-load region occur during four strokes, with the engine unit capable of achieving improved mountability to the vehicle. Considering Patent Literature 2, it is an object of the present invention to improve engine restart from the desired stop position in the compression stroke.

This object is achieved by a straddled vehicle according to claim 1.

### Solution to Problem

Accordingly, the present invention adopts the following configurations.
(1) A straddled vehicle comprising an engine unit, the engine unit comprising:
   a four-stroke engine body in which a high-load region and a low-load region occur during four strokes, the high-load region having a high load on rotation of a crankshaft, the low-load region having a lower load on rotation of the crankshaft than that of the high-load region;
   a three-phase brushless motor drivable by a battery provided in the vehicle, the three-phase brushless motor being configured to start the four-stroke engine body by driving the crankshaft in forward rotation in response to reception of a start instruction, the three-phase brushless motor being configured to generate power by being rotated along with rotation of the crankshaft after the four-stroke engine body is started;
   an inverter including a plurality of switching parts configured to control a current flowing between the battery and the three-phase brushless motor; and
   a control device including a starter motor controller and a combustion controller, the starter motor controller being configured to control the plurality of switching parts included in the inverter to control the current flowing between the battery and the three-phase brushless motor, the combustion controller being configured to control a combustion operation of the four-stroke engine body,
   the control device configured to
      while the crankshaft is in forward rotation after the combustion operation of the four-stroke engine body is stopped, control the plurality of switching parts such that a resistance is applied to the forward rotation of the crankshaft by the three-phase brushless motor, forcing the crankshaft to stop in a compression stroke of the four-stroke engine body, and
      in response to reception of the start instruction under a state where the crankshaft is stopped, control the plurality of switching parts so as to direct the three-phase brushless motor to start forward rotation of the crankshaft, the forward rotation being started from a position where the crankshaft is stopped in the compression stroke.

The low-load region (TL) is wider than the high-load region (TH) in the four strokes.

The control device (CT), in response to reception of a start instruction, is configured to control the three-phase brushless motor (SG) to
accelerate the rotation of the crankshaft (5) and, during at least part of a time period from when the crankshaft (5) starts the forward rotation to when the crankshaft (5) reaches the end of the compression stroke, continuously perform a control of limiting the output torque of the three-phase brushless motor (SG) so as to allow the crankshaft (5) to rotate with a torque lower than a maximum torque obtainable from the battery (14), and
after passing through the compression stroke, remove the limit put on the output torque of the three-phase brushless motor (SG) so as to cause the three-phase brushless motor (SG) to rotate with the maximum torque obtainable from the battery (14) and move the crankshaft (5) in forward rotation over the low-load region (TL) ranging from the expansion stroke to the compression stroke, until reaching the high-load region (TH) for a second time.

In the engine unit of (1), while the crankshaft is in forward rotation after the combustion operation of the four-stroke engine body is stopped, the control device directs the three-phase brushless motor to operate such that the resistance is applied to the forward rotation of the crankshaft, forcing the crankshaft to stop in the compression stroke of the four-stroke engine body. Then, in response to reception of the start instruction under the state where the crankshaft is stopped, the control device controls the plurality of switching parts so as to direct the three-phase brushless motor to start forward rotation of the crankshaft from the position where the crankshaft is stopped. That is, in the case of starting the four-stroke engine body in response to reception of the start instruction, even when an output torque of the motor is low, rotation of the crankshaft can be started from a position that allows the four-stroke engine body to be readily started. Upon starting rotation in response to reception of the start instruction, the crankshaft gradually increases the speed from the stopped state. The crankshaft, which has started forward rotation from the position in the compression stroke, passes through the compression stroke at a low speed. Since the crankshaft passes through the compression stroke at a low speed, the crankshaft is less likely to be affected by a reaction force of gas compression in a combustion chamber. This enables the crankshaft to promptly overcome a load of the high-load region in the compression stroke.

After passing through the compression stroke, the crankshaft moves in forward rotation over a low-load region which is a wide region ranging from an expansion stroke to the compression stroke, until reaching the high-load region for the second time. That is, the crankshaft starts the forward rotation at a position before the expansion stroke, and moves in the forward rotation over the low-load region which is a wide region covering the entirety of the expansion stroke. As a result, a long run-up zone is ensured for acceleration. This is how the three-phase brushless motor is able to increase the rotation speed of the crankshaft before the crankshaft reaches the high-load region for the second time. In this manner, both a high inertial force generated by the high rotation speed and the output torque of the three-phase brushless motor can be used to overcome the high-load region encountered for the second time. This makes it easy to start the four-stroke engine body even though the output torque of the motor is low. Therefore, a less output torque of the motor is allowed, and thus downsizing of the three-phase brushless motor is allowed. Since the four-stroke engine body can be readily started with a low output torque of the three-phase brushless motor, a reduced amount of magnets and a reduced thickness of windings are allowable for the three-phase brushless motor. This can avoid occurrence of an excessive power-generation current, which would otherwise occur due to a high rotation speed exerted when the three-phase brushless motor is generating power. Deterioration of the power generation efficiency can be suppressed.

In the configuration of (1), during forward rotation of the crankshaft, the plurality of switching parts are controlled such that the three-phase brushless motor applies the resistance to the forward rotation of the crankshaft, forcing the crankshaft to stop in the compression stroke of the four-stroke engine body. The position where the crankshaft will stop can be controlled more easily by applying the resistance to the forward rotation of the crankshaft than by, for example, driving the crankshaft in forward rotation by using an inertial force given from the combustion operation of the four-stroke engine body. Thus, the crankshaft can be stopped at a position that allows the four-stroke engine body to be readily started with a low output torque.
(2) The straddled vehicle according to (1), wherein
   the control device is further configured to:
   while the crankshaft is in forward rotation after the combustion operation of the four-stroke engine body is stopped, perform a vector control on the three-phase brushless motor such that the resistance is applied to the forward rotation of the crankshaft by the three-phase brushless motor, forcing the crankshaft to stop in the compression stroke of the four-stroke engine body; and
   in response to reception of the start instruction under the state where the crankshaft is stopped, control the plurality of switching parts so as to direct the three-phase brushless motor to start forward rotation of the crankshaft from the position where the crankshaft is stopped.

   In the configuration of (2), the vector control is performed on the three-phase brushless motor, which enables the three-phase brushless motor to apply a strong resistance to the forward rotation of the crankshaft. This enables the crankshaft to more reliably stop at the position that allows the four-stroke engine body to be readily started with a low output torque.
(3) The straddled vehicle according to (1), wherein
   the control device is further configured to:
   while the crankshaft is in forward rotation after the combustion operation of the four-stroke engine body is stopped, perform a phase control in which the plurality of switching parts are rendered to conduct at advanced or delayed timings, such that the resistance is applied to the forward rotation of the crankshaft by the three-phase brushless motor, forcing the crankshaft to stop in the compression stroke of the four-stroke engine body; and
   in response to reception of the start instruction under the state where the crankshaft is stopped, control the plurality of switching parts so as to direct the three-phase brushless motor to start forward rotation of the crankshaft from the position where the crankshaft is stopped.

   The configuration of (3) performs the phase control for advancing or delaying the timings at which the switching parts are rendered conducting, which enables the three-phase brushless motor to apply a relatively strong resistance to the forward rotation of the crankshaft with a simple configuration.
(4) The straddled vehicle according to any one of (1) to (3), wherein
   the three-phase brushless motor includes a plurality of windings corresponding to three phases, and
   the control device is further configured to:
   while the crankshaft is in forward rotation after the combustion operation of the four-stroke engine body is stopped, control the plurality of switching parts such that terminals of the plurality of windings are short-circuited, such that the resistance is applied to the forward rotation of the crankshaft by the three-phase brushless motor, forcing the crankshaft to stop in the compression stroke of the four-stroke engine body; and
   in response to reception of the start instruction under the state where the crankshaft is stopped, control the plurality of switching parts so as to direct the three-phase brushless motor to start forward rotation of the crankshaft from the position where the crankshaft is stopped.

   The configuration of (4) controls the switching parts so as to short-circuit the terminals of the plurality of windings, thus directing the three-phase brushless motor to apply the resistance to the forward rotation of the crankshaft. Since a resistance force generated by the short-circuiting of the windings is derived from an induced electromotive voltage of the windings, the resistance force increases as the rotation speed of the crankshaft increases and decreases as the rotation speed of the crankshaft decreases. Therefore, when the rotation speed of the crankshaft is high, the resistance force is high so that the rotation of the crankshaft rapidly decelerates. As the rotation speed of the crankshaft decreases, the resistance force decreases. Meanwhile, the crankshaft suffers a resistance against its rotation due to a reaction force of compression in the compression stroke. A resistance force generated by the reaction force of compression increases as the crankshaft driven in forward rotation approaches the compression top dead center. Thus, the resistance force generated by the short-circuiting of the windings gradually decreases as the crankshaft decelerates in the compression stroke, whereas the resistance force generated by the reaction force of compression increases as the rotation of the crankshaft progresses in the compression stroke. The configuration of (4), which takes advantage of a balance between the decrease of the resistance force generated by the short-circuiting of the windings and the increase of the resistance force generated by the reaction force of compression, can more improve the reliability that the forward rotation of the crankshaft stops at a position that allows the crankshaft to be readily started.
(5) The straddled vehicle according to any one of (1) to (4), wherein
   the control device is further configured to:
   after the combustion operation of the four-stroke engine body is stopped, based on the rotation speed of the crankshaft and the position of the crankshaft, direct the three-phase brushless motor to operate such that the resistance is applied to the forward rotation of the crankshaft, forcing the crankshaft to stop in the compression stroke of the four-stroke engine body.
   In the configuration of (5), after the combustion operation of the four-stroke engine body is stopped, based on the rotation speed of the crankshaft and the position of the crankshaft, the control device directs the three-phase brushless motor to operate such that the resistance is applied to the forward rotation of the crankshaft. As a result, a variation in the rotation speed of the crankshaft and a variation in the timing when the combustion operation is stopped are less influential, so that reliability of stopping at the position that allows the four-stroke engine body to be readily started with a low output torque can bemore improved.
(6) The straddled vehicle according to any one of (1) to (5), wherein the control device is further configured to:
   for a predefined time period after starting the combustion operation of the four-stroke engine body by driving the crankshaft in forward rotation in response to reception of the start instruction, control the plurality of switching parts so as to direct the three-phase brushless motor to accelerate the forward rotation of the crankshaft.
   In the configuration of (6), while the four-stroke engine body is in combustion, the plurality of switching parts are controlled to direct the three-phase brushless motor to accelerate the forward rotation of the crankshaft. The acceleration of this forward rotation of the crankshaft is greater than that of forward rotation energized only by the combustion operation without use of the three-phase brushless motor. Therefore, the forward rotation of the crankshaft rotated by the combustion of the four-stroke engine body can be stabilized. In addition, forward rotation of the crankshaft rotated by combustion of the four-stroke engine body can be accelerated more rapidly when, for example, accelerating a vehicle. In an example, the predefined time period may be set to a predetermined length of time. In an alternative example, the predefined time period may be a time period in which the rotation speed of the crankshaft is within a predetermined range.
(7) The straddled vehicle according to (6), wherein
   the control device is further configured to:
   in response to reception of the start instruction, perform the vector control on the three-phase brushless motor so as to drive the crankshaft in forward rotation; and
   for a predefined time period after starting the combustion operation of the four-stroke engine body, perform the vector control on the three-phase brushless motor so as to direct the three-phase brushless motor to accelerate the forward rotation of the crankshaft.

In the configuration of (7), the vector control is continued, so that the forward rotation of the crankshaft is further accelerated. This can enhance the stabilization of the forward rotation of the crankshaft rotated by the combustion of the four-stroke engine body. In addition, forward rotation of the crankshaft rotated by combustion of the four-stroke engine body can be accelerated more rapidly when, for example, accelerating a vehicle.

### Advantageous Effects of Invention

### Brief Description of Drawings

[Fig. 1] Fig. 1 is cross-sectional view schematically showing an outline configuration of part of an engine unit according to an embodiment of the present invention.
[Fig. 2] Fig. 2 is an illustrative diagram schematically showing the relationship between a crank angle position and a required torque at a time of engine start.
[Fig. 3] Fig. 3 is a cross-sectional view showing, on an enlarged scale, a three-phase brushless motor shown in Fig. 1 and therearound.
[Fig. 4] Fig. 4 is a cross-sectional view showing a cross-section of the three-phase brushless motor shown in Fig. 3, as taken along a plane perpendicular to its rotation axis.
[Fig. 5] Fig. 5 is a block diagram showing a basic electrical configuration of the engine unit shown in Fig. 1.
[Fig. 6] Fig. 6 is a flowchart illustrating an operation of the engine unit shown in Fig. 1.
[Fig. 7] Fig. 7A illustrates a movement of a crankshaft 5 of the engine unit shown in Fig. 1; and Fig. 7B shows a comparative example illustrating a movement of the crankshaft in reverse rotation.
[Fig. 8] Fig. 8 shows exemplary current and voltage waveforms in a vector control.
[Fig. 9] Fig. 9 is an illustrative diagram schematically showing the relationship between the crank angle position and the required torque.
[Fig. 10] Fig. 10A is a graph showing a variation in the engine rotation speed during a time period from when combustion of an engine is stopped to when the engine is restarted in the engine unit of this embodiment; and Fig. 10B is a graph showing a variation in the engine rotation speed during a time period from when combustion of an engine is stopped to when the engine is restarted in an engine unit having no vector control.
[Fig. 11] Fig. 11 is a diagram showing an external appearance of a vehicle to which the engine unit is mounted.

### Description of Embodiments

A description will be given of studies carried out by the present inventors about making a crankshaft stop in a compression stroke by directing a three-phase brushless motor to apply a resistance to forward rotation of the crankshaft while the crankshaft is making the forward rotation after a combustion operation of a four-stroke engine body is stopped, and upon reception of a start instruction, starting forward rotation of the crankshaft.

For example, as shown in the Patent Literature 1, driving the crankshaft in reverse rotation under a state where no start instruction is received while the combustion operation of the four-stroke engine body and the forward rotation of the crankshaft are stopped creates a situation where only part of a low-load region can be used for forward rotation of the crankshaft.

In addition, in the case of assisting rotation of the crankshaft with a motor in a time period after the combustion operation of the four-stroke engine body is stopped and before the forward rotation of the crankshaft stops, it is not easy to stop the crankshaft in a target region in which a shortened time is required for starting. This is because the crankshaft whose rotation is assisted by the motor after the combustion operation is stopped is rotated not only by a force given from the motor but also by an inertial force given from the last combustion operation. It is not easy to assist with the motor the rotation of the crankshaft, which is rotated also by the inertial force given from the last combustion operation, so as to place the crankshaft in the target region. To stop a crankshaft rotated by an inertial force given from the last combustion operation, for example, a high load caused by a reaction force of compression is often used. In such a case, the crankshaft once makes reverse rotation and then stops without overcoming the peak of the load. Since a stop position of the crankshaft depends on the degree (distance) of the reverse rotation which is made without overcoming of the peak of the load, there is a large variation in the stop position of the crankshaft. That is, there is a large variation in the position from which the crankshaft will start rotation in response to reception of a start instruction. Accordingly, there is a large variation in a torque required for forward rotation of the crankshaft.

On the other hand, driving the crankshaft in forward rotation up to the compression stroke by controlling a voltage applied from a battery to the three-phase brushless motor under a state where forward rotation of the crankshaft is stopped, makes it easier to control a movement of the crankshaft to a target position as compared with driving the crankshaft in forward rotation by using the inertial force given from the combustion operation of the four-stroke engine body. The crankshaft can therefore be moved in a short time to a position that allows the four-stroke engine body to be readily started with a low output torque. As a result, a less output torque of the motor is allowed, and thus downsizing of the three-phase brushless motor is allowed. Both shortening of the length of time required for restarting and downsizing of the three-phase brushless motor can be achieved at a higher level.

Hereunder, the present invention will be described based on preferred embodiments with reference to the drawings.

### [Engine Unit]

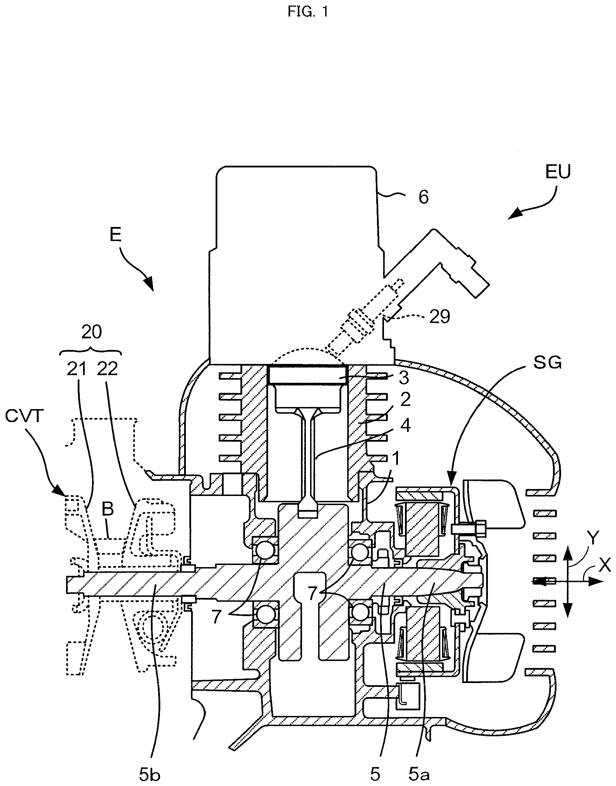

Fig. 1 is a cross-sectional view schematically showing an outline configuration of part of an engine unit EU according to a first embodiment of the straddled vehicle of the present invention. The engine unit EU of this embodiment is a four-stroke engine unit for use in vehicle.

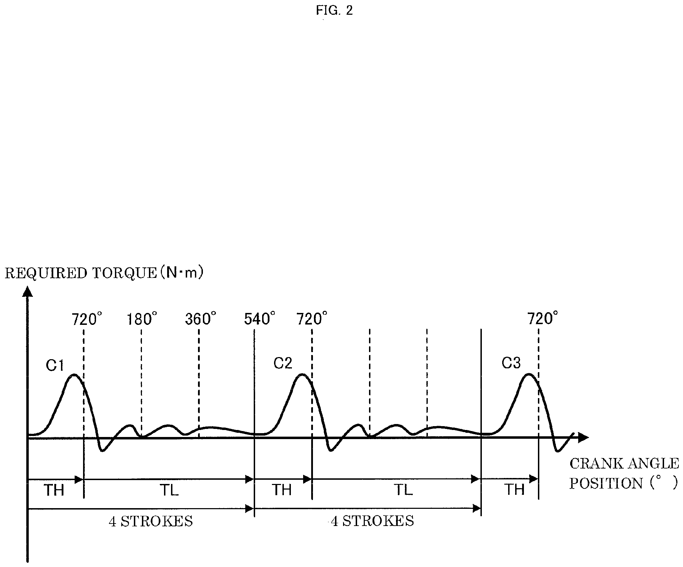

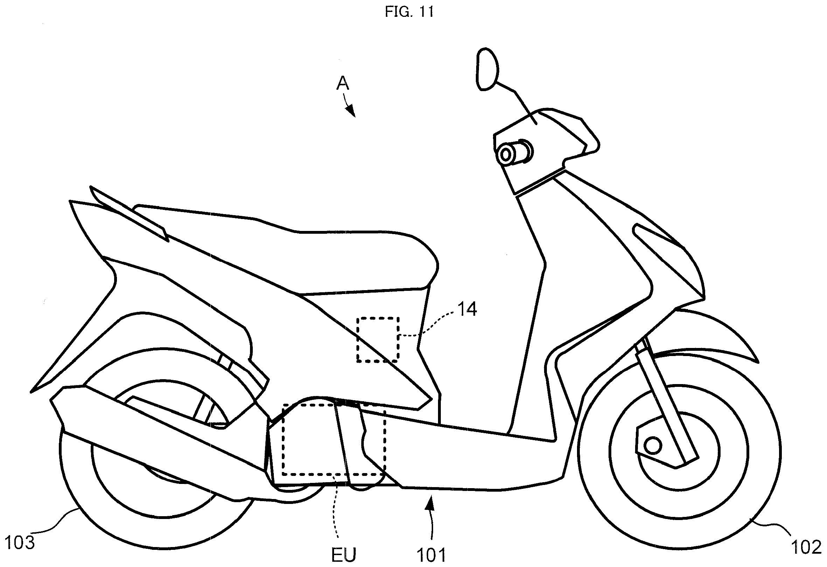

The engine unit EU is installed in a motorcycle (see Fig. 11) which is an example of the vehicle. The engine unit EU includes a four-stroke engine body E and a three-phase brushless motor SG. The four-stroke engine body E is a four-stroke engine having a single cylinder. In the four-stroke engine body E, the relationship shown in Fig. 2 is established between a crank angle position and a required torque.

Fig. 2 is an illustrative diagram schematically showing the relationship between a crank angle position and a required torque at a time of engine start.

The four-stroke engine body E has, during four strokes, a high-load region TH in which a high load is put on rotation of a crankshaft 5 and a low-load region TL in which a load put on rotation of the crankshaft 5 is lower than that of the high-load region TH. From the viewpoint of the rotation angle of the crankshaft 5, the low-load region TL is equal to or wider than the high-load region TH. To be specific, the low-load region TL is wider than the high-load region TH. In other words, a rotation angle region corresponding to the low-load region TL is wider than a rotation angle region corresponding to the high-load region TH. In more detail, during rotation, the four-stroke engine body E repeats four strokes, namely, an intake stroke, a compression stroke, an expansion stroke, and an exhaust stroke. As shown in Fig. 2, the compression stroke is included in the high-load region TH, and not included in the low-load region TL. In the four-stroke engine body E of this embodiment, the high-load region TH is a region that substantially overlaps the compression stroke, and the low-load region TL is a region that substantially overlaps the intake stroke, the expansion stroke, and the exhaust stroke. It is not necessary that the boundary of the high-load region TH and the boundary of the low-load region TL are coincident with the boundaries of the corresponding strokes.

As shown in Fig. 1, the engine unit EU includes the three-phase brushless motor SG. The three-phase brushless motor SG is a starter motor. More specifically, the three-phase brushless motor SG is a starter generator. At a time of engine start, the three-phase brushless motor SG drives the crankshaft 5 in forward rotation to start the four-stroke engine body E. During at least part of a time period following the start of the four-stroke engine body E, the three-phase brushless motor SG is driven in forward rotation by the crankshaft 5 to function as a generator. At this time, the three-phase brushless motor SG generates power by being rotated along with rotation of the crankshaft 5. Although the three-phase brushless motor SG functions as a generator, it is not indispensable that the three-phase brushless motor SG functions as a generator all the time after combustion of the engine is started. In an acceptable example, the three-phase brushless motor SG does not function as a generator immediately after combustion of the engine is started, and the three-phase brushless motor SG functions as a generator upon satisfaction of a predetermined condition. Examples of the predetermined condition include a condition that the rotation speed of the engine reaches a predetermined speed or a condition that a predetermined time period elapses after combustion of the engine is started. It may be acceptable that a period in which the three-phase brushless motor SG functions as a generator and a period in which the three-phase brushless motor SG functions as a motor (for example, as a vehicle-driving motor) are present after combustion of the engine is started.

The three-phase brushless motor SG also serves to apply a resistance to rotation of the rotating crankshaft 5 in response to a control when the crankshaft 5 rotates. The three-phase brushless motor SG decelerates rotation of the crankshaft 5 by applying the resistance to the rotation of the crankshaft 5.

The three-phase brushless motor SG is attached to the crankshaft 5 of the four-stroke engine body E. In this embodiment, the three-phase brushless motor SG is attached to the crankshaft 5 without interposition of a power transmission mechanism (such as a belt, a chain, a gear, a speed reducer, or a speed increaser). However, the three-phase brushless motor SG may be attached to the crankshaft 5 with interposition of a power transmission mechanism. In the present invention, it is preferable that the rotation axis of the three-phase brushless motor SG is substantially coincident with the rotation axis of the crankshaft 5. It is also preferable that the three-phase brushless motor SG is attached to the crankshaft 5 without interposition of a power transmission mechanism, as illustrated in this embodiment.

The four-stroke engine body E includes a crank case 1 (engine case 1), a cylinder 2, a piston 3, a connecting rod 4, and a crankshaft 5. The cylinder 2 is arranged to protrude from the crank case 1 in a predetermined direction (for example, obliquely upward). The piston 3 is arranged in the cylinder 2 such that the piston 3 is freely movable to and fro. The crankshaft 5 is rotatably arranged in the crank case 1. One end portion (for example, an upper end portion) of the connecting rod 4 is coupled to the piston 3. The other end portion (for example, a lower end portion) of the connecting rod 4 is coupled to the crankshaft 5. A cylinder head 6 is attached to an end portion (for example, an upper end portion) of the cylinder 2. The crankshaft 5 is supported on the crank case 1 via a pair of bearings 7 in a freely rotatable manner. One end portion 5a (for example, a right end portion) of the crankshaft 5 protrudes out of the crank case 1. The three-phase brushless motor SG is attached to the one end portion 5a of the crankshaft 5.

The other end portion 5b (for example, a left end portion) of the crankshaft 5 protrudes out of the crank case 1. A primary pulley 20 of a continuously variable transmission CVT is attached to the other end portion 5b of the crankshaft 5. The primary pulley 20 includes a fixed sheave 21 and a movable sheave 22. The fixed sheave 21 is fixed to a distal end portion of the other end portion 5b of the crankshaft 5 in such a manner that the fixed sheave 21 rotates together with the crankshaft 5. The movable sheave 22 is splined to the other end portion 5b of the crankshaft 5. Thus, the movable sheave 22 is movable in an axial direction X. The movable sheave 22 is configured to rotate together with the crankshaft 5 with the interval between the movable sheave 22 and the fixed sheave 21 varying. A belt B is wrapped on the primary pulley 20 and a secondary pulley (not shown). A rotation force of the crankshaft 5 is transmitted to a drive wheel of a motorcycle (see Fig. 11).

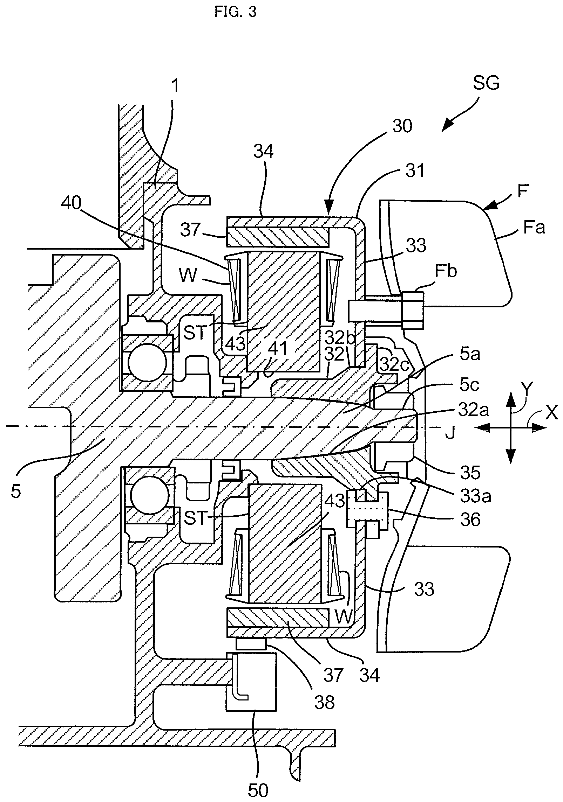

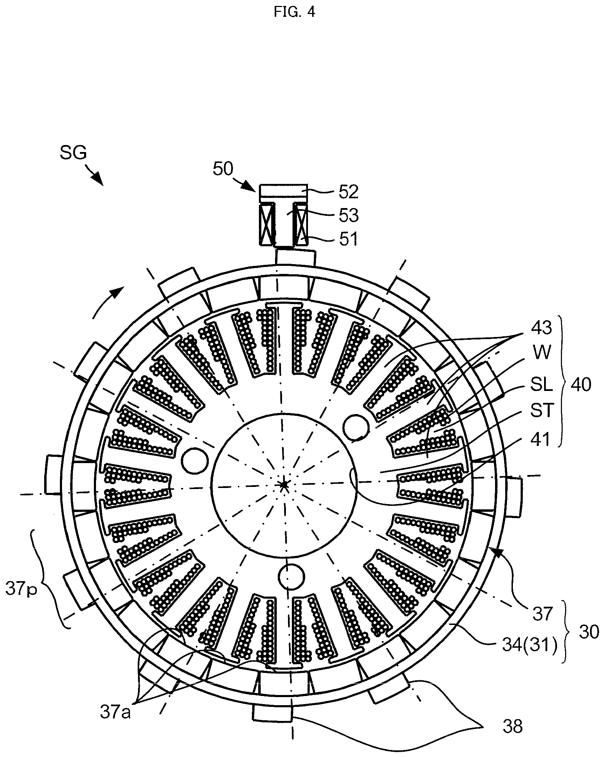

Fig. 3 is a cross-sectional view showing, on an enlarged scale, the three-phase brushless motor SG shown in Fig. 1 and therearound. Fig. 4 is a cross-sectional view showing a cross-section of the three-phase brushless motor SG, as taken along a plane perpendicular to its rotation axis J shown in Fig. 3.

The three-phase brushless motor SG includes an outer rotor 30 and an inner stator 40. The outer rotor 30 includes an outer rotor main body part 31. The outer rotor main body part 31 is made of, for example, a ferromagnetic material. The outer rotor main body part 31 is in the shape of a cylinder with a bottom. The outer rotor main body part 31 includes a cylindrical boss portion 32, a disk-shaped bottom wall portion 33, and a back yoke portion 34 having a cylindrical shape. The cylindrical boss portion 32 is fixed to the crankshaft 5 under a state where the one end portion 5a of the crankshaft 5 is received in the cylindrical boss portion 32. The bottom wall portion 33, which is fixed to the cylindrical boss portion 32, has a disk-like shape that extends in a radial direction Y of the crankshaft 5. The back yoke portion 34 has a cylindrical shape that extends from an outer circumferential edge of the bottom wall portion 33 in the axial direction X of the crankshaft 5. The back yoke portion 34 extends toward the crank case 1.

The bottom wall portion 33 and the back yoke portion 34 are integrally formed of, for example, a metal plate being stamped. In the present invention, however, it is acceptable that the bottom wall portion 33 and the back yoke portion 34 are formed as separate parts. More specifically, in the outer rotor main body part 31, the back yoke portion 34 may be formed integrally with another part of the outer rotor main body part 31, or may be formed as a part separate from another part of the outer rotor main body part 31. In a case where the back yoke portion 34 and another part are formed as separate parts, an essential feature is that the back yoke portion 34 is made of a ferromagnetic material, and another part may be made of a material different from the ferromagnetic material.

The cylindrical boss portion 32 has a tapered reception hole 32a for receiving the one end portion 5a of the crankshaft 5. The tapered reception hole 32a extends in the axial direction X of the crankshaft 5. The tapered reception hole 32a has a taper angle that corresponds to an outer circumferential surface of the one end portion 5a of the crankshaft 5. When the one end portion 5a of the crankshaft 5 enters the reception hole 32a, the outer circumferential surface of the one end portion 5a comes into contact with an inner circumferential surface of the reception hole 32a, and the crankshaft 5 is secured to the reception hole 32a. As a result, the position of the boss portion 32 is settled with respect to the axial direction X of the crankshaft 5. In this condition, a nut 35 is screwed onto a male thread portion 5c formed in a distal end portion of the one end portion 5a of the crankshaft 5. In this manner, the cylindrical boss portion 32 is fixed to the crankshaft 5.

The cylindrical boss portion 32 has a large-diameter portion 32b that is provided in a proximal end portion (in Fig. 3, at the right side) of the cylindrical boss portion 32. The cylindrical boss portion 32 has a flange portion 32c that is formed on an outer circumferential surface of the large-diameter portion 32b. The flange portion 32c extends radially outward. The large-diameter portion 32b of the cylindrical boss portion 32 is received in a hole 33a that is formed in a central region of the bottom wall portion 33 of the outer rotor main body part 31. In this condition, the flange portion 32c is in contact with an outer peripheral surface (a right-hand surface in Fig. 3) of the bottom wall portion 33. The flange portion 32c of the cylindrical boss portion 32 and the bottom wall portion 33 of the outer rotor main body part 31 are fixed together by rivets 36 at a plurality of locations with respect to a circumferential direction of the outer rotor main body part 31. The rivets 36 penetrate through the flange portion 32c and the bottom wall portion 33.

The three-phase brushless motor SG is a permanent-magnet motor. The back yoke portion 34 of the outer rotor main body part 31 has a plurality of permanent magnet parts 37 that are provided on an inner circumferential surface of the back yoke portion 34. Each of the permanent magnet parts 37 is provided such that S pole and N pole are aligned with respect to a radial direction of the three-phase brushless motor SG.

The plurality of permanent magnet parts 37 are arranged in such a manner that N pole and S pole alternately appear with respect to a circumferential direction of the three-phase brushless motor SG. In this embodiment, the number of magnetic poles of the outer rotor 30 opposed to the inner stator 40 is twenty-four. The number of magnetic poles of the outer rotor 30 means the number of magnetic poles opposed to the inner stator 40. The number of magnetic pole faces of the permanent magnet parts 37 that are opposed to teeth 43 of a stator core ST is equivalent to the number of magnetic poles of the outer rotor 30. A magnetic pole face included in each magnetic pole of the outer rotor 30 corresponds to a magnetic pole face of the permanent magnet part 37 that is opposed to the inner stator 40. The magnetic pole face of the permanent magnet part 37 is covered with a non-magnetic material (not shown) that is arranged between the permanent magnet part 37 and the inner stator 40. No magnetic material is arranged between the permanent magnet part 37 and the inner stator 40. No particular limitation is put on the non-magnetic material, and examples thereof include a stainless steel material. In this embodiment, the permanent magnet part 37 is a ferrite magnet. In the present invention, conventionally known magnets including a neodymium bonded magnet, a samarium-cobalt magnet, a neodymium magnet, and the like, are adoptable as a permanent magnet. The shape of the permanent magnet part 37 is not particularly limited. It may be acceptable that the outer rotor 30 is of interior permanent magnet type (IPM type) having the permanent magnet parts 37 embedded in a magnetic material, but preferably the outer rotor 30 is of surface permanent magnet type (SPM type) having the permanent magnet parts 37 exposed from a magnetic material, as illustrated in this embodiment.

As described above, the outer rotor 30, which is attached to the crankshaft 5 such that it is rotatable together with the crankshaft 5, is a rotating element for increasing the inertia of the crankshaft 5. A cooling fan F including a plurality of blade portions Fa is provided to the outer peripheral surface (at the right side in Figs. 1 and 3) of the bottom wall portion 33 of the outer rotor 30. The cooling fan F is fixed to the outer peripheral surface of the bottom wall portion 33 by means of a fixture (a plurality of bolts Fb).

The inner stator 40 includes a stator core ST and multi-phase stator windings W. The stator core ST is obtained by, for example, thin silicon steel plates being stacked in the axial direction. The stator core ST has, in its central region, a hole 41 whose inner diameter is larger than the outer diameter of the cylindrical boss portion 32 of the outer rotor 30. The stator core ST includes a plurality of teeth 43 that integrally extend radially outward (see Fig. 4). In this embodiment, eighteen teeth 43 in total are arranged at intervals with respect to the circumferential direction. In other words, the stator core ST has eighteen slots SL in total that are arranged at intervals with respect to the circumferential direction (see Fig. 4). The teeth 43 are arranged at substantially equal intervals with respect to the circumferential direction.

The three-phase brushless motor SG is a three-phase motor. The three-phase brushless motor SG has a plurality of stator windings W corresponding to the three phases. Each of the stator windings W is wound on each of the teeth 43. The multi-phase stator windings W are arranged through the slots SL. Each of the multi-phase stator windings W belongs to any of U-phase, V-phase, and W-phase. The stator windings W are arranged in the order of U-phase, V-phase, and W-phase, for example. The stator winding W corresponds to an example of the winding of the present invention.

As shown in Fig. 3, the inner stator 40 has the hole 41 formed in a central region of the inner stator 40 with respect to the radial direction of the three-phase brushless motor SG. The crankshaft 5 and the cylindrical boss portion 32 of the outer rotor 30 are arranged in the hole 41 with a gap ensured between them and a wall surface (of the inner stator 40) defining the hole 41. The inner stator 40 under this condition is attached to the crank case 1 of the four-stroke engine body E. The teeth 43 of the inner stator 40 are arranged such that end portions (distal surfaces) of the teeth 43 are at an interval from the magnetic pole faces (inner circumferential surfaces) of the permanent magnet parts 37 of the outer rotor 30. In this state, the outer rotor 30 is rotated along with rotation of the crankshaft 5. The outer rotor 30 rotates together with the crankshaft 5. Therefore, the rotation speed of the outer rotor 30 is equal to the rotation speed of the crankshaft 5.

A further description of the outer rotor 30 will be given with reference to Fig. 4. The permanent magnet parts 37 are provided outside the inner stator 40 with respect to the radial direction of the three-phase brushless motor SG. The back yoke portion 34 is provided outside the permanent magnet parts 37 with respect to the radial direction. The permanent magnet parts 37 include, in their surfaces opposed to the inner stator 40, a plurality of magnetic pole faces 37a. The magnetic pole faces 37a are arranged side by side with respect to the circumferential direction of the three-phase brushless motor SG. Each of the magnetic pole faces 37a has N pole or S pole. The N pole and S pole are arranged alternately with respect to the circumferential direction of the three-phase brushless motor SG. The magnetic pole faces 37a of the permanent magnet parts 37 face the inner stator 40. In this embodiment, a plurality of magnets are arranged in the circumferential direction of the three-phase brushless motor SG, and each of the plurality of magnets is arranged with its S pole and N pole lining up along the radial direction of the three-phase brushless motor SG. A single S pole and a single N pole adjacent to each other with respect to the circumferential direction constitute a magnetic pole face pair 37p. The number of the magnetic pole face pairs 37p is one-half of the number of the magnetic pole faces 37a. In this embodiment, the outer rotor 30 is provided with twenty-four magnetic pole faces 37a that are opposed to the inner stator 40, and the number of the magnetic pole face pairs 37p included in the outer rotor 30 is twelve. In Fig. 4, twelve magnetic pole face pairs 37p corresponding to twelve magnet pairs are shown. For clarity of the drawing, the reference sign 37p is given to only one of the pairs. The number of the magnetic pole faces 37a included in the three-phase brushless motor SG is more than 2/3 of the number of the teeth 43. The number of the magnetic pole faces 37a included in the three-phase brushless motor SG is equal or more than 4/3 of the number of the teeth 43.

The outer rotor 30 includes, on its outer surface, a plurality of detection object parts 38 for detection of the rotation position of the outer rotor 30. Magnetic effects are used to detect the plurality of detection object parts 38. The plurality of detection object parts 38 arranged at intervals with respect to the circumferential direction are provided on the outer surface of the outer rotor 30. In this embodiment, the plurality of detection object parts 38 arranged at intervals with respect to the circumferential direction are provided on an outer circumferential surface of the outer rotor 30. The plurality of detection object parts 38 are arranged on an outer circumferential surface of the back yoke portion 34 having a cylindrical shape. Each of the plurality of detection object parts 38 protrudes from the outer circumferential surface of the back yoke portion 34 toward the outside with respect to the radial direction Y of the three-phase brushless motor SG. The bottom wall portion 33, the back yoke portion 34, and the detection object parts 38 are integrally formed of, for example, a metal plate such as an iron plate being stamped. That is, the detection object parts 38 are made of a ferromagnetic material. Details of arrangement of the detection object parts 38 will be described later.

A rotor position detection device 50 is a device that detects the position of the outer rotor 30. The rotor position detection device 50 is provided at a position allowed to be opposed to the plurality of detection object parts 38. To be more specific, the rotor position detection device 50 is arranged at a position that allows the plurality of detection object parts 38 to come into opposition to the rotor position detection device 50 one after another. The rotor position detection device 50 is opposed to a path through which the detection object parts 38 move along with rotation of the outer rotor 30. The rotor position detection device 50 is arranged at a position distant from the inner stator 40. In this embodiment, the rotor position detection device 50 is arranged such that the back yoke portion 34 and the permanent magnet parts 37 of the outer rotor 30 are located between the rotor position detection device 50 and the inner stator 40 having the stator windings W with respect to the radial direction of the crankshaft 5. The rotor position detection device 50 is arranged outside the outer rotor 30 with respect to the radial direction of the three-phase brushless motor SG. The rotor position detection device 50 faces the outer circumferential surface of the outer rotor 30.

The rotor position detection device 50 includes a detection-purpose winding 51, a detection-purpose magnet 52, and a core 53. The detection-purpose winding 51 functions as a pick-up coil for detecting the detection object parts 38. The core 53 is a rod-like member made of, for example, iron. The detection-purpose winding 51 magnetically detects the detection object parts 38. Upon start of rotation of the crankshaft 5, the rotor position detection device 50 starts detection of the rotation position of the outer rotor 30. Instead of the above-described configuration in which a voltage caused by an electromotive force varies along with passing of the detection object parts 38, other configurations are also adoptable for the rotor position detection device 50. Examples of such other configurations adoptable for the rotor position detection device 50 include a configuration in which the detection-purpose winding 51 is constantly rendered conducting and a conducting current varies depending on a variation in inductance caused along with passing of the detection object parts 38. No particular limitation is put on the rotor position detection device 50, and it may include a Hall element or an MR element. The engine unit EU of this embodiment (see Fig. 1) may include a Hall element or an MR element.

Referring to Fig. 4, a description will be given of arrangement of the detection object parts 38 of the outer rotor 30. In this embodiment, the plurality of detection object parts 38 are provided on the outer surface of the outer rotor 30. The plurality of detection object parts 38 have the same positional relationship relative to the corresponding magnetic pole face pairs 37p. The rotor position detection device 50 is provided at a position allowed to be opposed to the plurality of detection object parts 38. The rotor position detection device 50 is provided at a position allowed to be opposed to each of the plurality of detection object parts 38 during rotation of the outer rotor 30. The number of the detection object parts 38 to which the rotor position detection device 50 is simultaneously (at one time) opposed is one, and not more than one. In Fig. 4, the dashed and dotted lines indicate specified positions with respect to the circumferential direction, which are defined in advance. Each of the specified positions is a position in the magnetic pole pair 37p including two magnetic poles (S pole and N pole) adjacent to each other with respect to the circumferential direction. In this embodiment, the outer rotor 30 is provided with eleven detection object parts 38, the number of which is one less than the number of the specified positions. The eleven detection object parts 38 are arranged at eleven of the twelve specified positions, respectively.

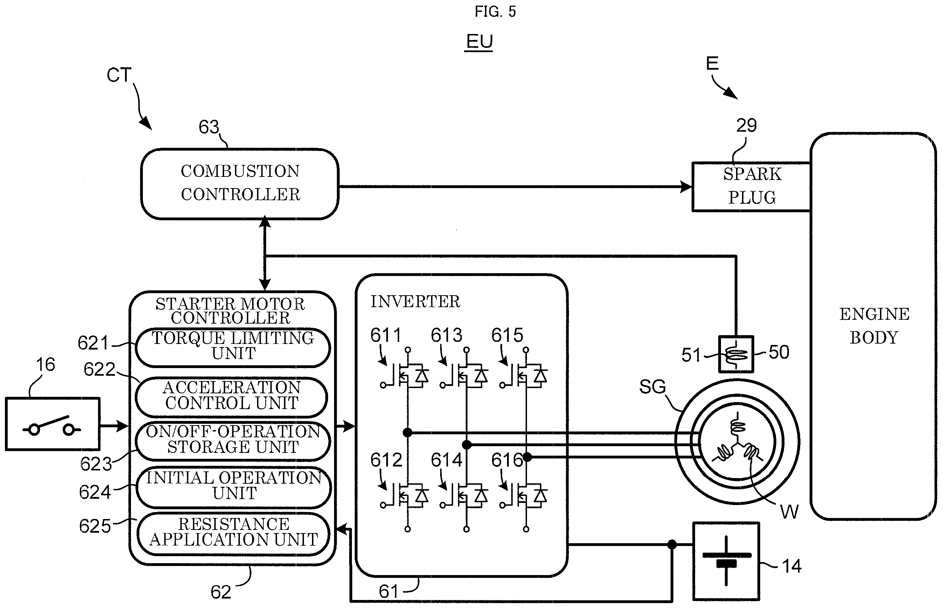

Fig. 5 is a block diagram showing a basic electrical configuration of the engine unit EU shown in Fig. 1.

The engine unit EU includes the four-stroke engine body E, the three-phase brushless motor SG, and a control device CT. The three-phase brushless motor SG, a spark plug 29, and a battery 14 are connected to the control device CT.

The control device CT is connected to the multi-phase stator windings W, and supplies a current from the battery 14 provided in a vehicle to the multi-phase stator windings W. The control device CT includes a starter motor controller 62, a combustion controller 63, and a plurality of switching parts 611 to 616. In this embodiment, the control device CT includes six switching parts 611 to 616. The switching parts 611 to 616 constitute an inverter 61. The inverter 61 is a three-phase bridge inverter. The switching parts 611 to 616 of the inverter 61 are provided between the battery 14 and the three-phase brushless motor SG. The switching parts 611 to 616 control a voltage applied from the battery 14 to the three-phase brushless motor SG. The plurality of switching parts 611 to 616, each of which is connected to each phase of the multi-phase stator windings W, selectively apply or do not apply the voltage between the multi-phase stator windings W and the battery 14. In this manner, the plurality of switching parts 611 to 616 selectively allow or block the passing of a current between the multi-phase stator windings W and the battery 14. That is, the plurality of switching parts 611 to 616 control a current flow between the battery 14 and the three-phase brushless motor SG. More specifically, when the three-phase brushless motor SG functions as a starter motor, switching between causing conduction of the multi-phase stator windings W and stopping the conduction is implemented by on/off-operation of the switching parts 611 to 616. When the three-phase brushless motor SG functions as a generator, switching between allowing and blocking the passing of a current between each of the stator windings W and the battery 14 is implemented by on/off-operation of each of the switching parts 611 to 616. By switching on/off the switching parts 611 to 616 one after another, a control of a voltage and a rectification of a three-phase AC outputted from the three-phase brushless motor SG are performed.

Each of the switching parts 611 to 616 includes a switching element. The switching element is, for example, a transistor and in more detail, a FET (Field Effect Transistor). Instead of FETs, for example, thyristors or IGBTs (Insulated Gate Bipolar Transistors) are also adoptable for the switching parts 611 to 616.

The starter motor controller 62 controls the plurality of switching parts 611 to 616. The starter motor controller 62 controls a voltage applied from the battery 14 to the three-phase brushless motor SG by controlling each of the six switching parts 611 to 616 corresponding to the three phases. The starter motor controller 62 controls the operation of the three-phase brushless motor SG by controlling on/off-operation of each of the switching parts 611 to 616. The starter motor controller 62 is able to drive the three-phase brushless motor SG in either forward or reverse rotation by controlling on/off-operation of each of the switching parts 611 to 616. The starter motor controller 62 includes a torque limiting unit 621, an acceleration control unit 622, an on/off-operation storage unit 623, an initial operation unit 624, and a resistance application unit 625.

The combustion controller 63 and the starter motor controller 62 including the torque limiting unit 621, the acceleration control unit 622, and the resistance application unit 625 are implemented by a computer (not shown) and control software executable by the computer. Here, it may be also acceptable that the combustion controller 63 and the starter motor controller 62 are partially or entirely implemented by a wired logic which is an electronic circuit. For example, the starter motor controller 62 and the combustion controller 63 may be configured as separate devices arranged at a distance from each other, or alternatively they may be configured as an integrated device.

The on/off-operation storage unit 623 is formed of a memory, for example. The on/off-operation storage unit 623 stores data relating to on/off-operation of the plurality of switching parts 611 to 616. More specifically, the on/off-operation storage unit 623 stores a map of information used for the control device CT to control the three-phase brushless motor SG and the four-stroke engine body E, and software describing the information. The initial operation unit 624 is formed of an electronic circuit. The initial operation unit 624 generates an electrical signal for performing on/off-operation of the plurality of switching parts 611 to 616 when the crankshaft 5 is in a stopped state. The control device CT may concurrently operate both the on/off-operation storage unit 623 and the initial operation unit 624, or may operate one of the on/off-operation storage unit 623 and the initial operation unit 624.

After combustion of the four-stroke engine body E is stopped, the resistance application unit 625 controls the three-phase brushless motor SG to control the rotation of the crankshaft 5 such that the rotation of the crankshaft 5 stops. In response to a start instruction (restart instruction), the torque limiting unit 621 and the acceleration control unit 622 control the three-phase brushless motor SG so as to start or accelerate the rotation of the crankshaft 5.

The combustion controller 63 causes the spark plug 29 to perform an ignition operation, thus controlling a combustion operation of the four-stroke engine body E. In a case where the four-stroke engine body E includes a fuel injector that injects a fuel for generation of a mixed gas, the combustion controller 63 also controls injection of the fuel injector, to control the combustion operation of the four-stroke engine body E.

A starter switch 16 for starting the four-stroke engine body E is connected to the starter motor controller 62. The starter switch 16 is operated by a rider to start the four-stroke engine body E. The starter motor controller 62 of the control device CT detects a voltage of the battery 14, and thus detects the state of charge of the battery 14. For the detection of the state of charge of the battery 14, not only detection of the voltage of the battery 14 but also, for example, detection of a current flowing in the battery 14 in a charged state is adoptable.

The control device CT directs the starter motor controller 62 to control the inverter 61. The control device CT controls the three-phase brushless motor SG via operations of the inverter 61. In this embodiment, a capacitor (not shown) is provided between the inverter 61 and the battery 14, and the battery 14 and the capacitor constitute an electricity storage unit.

### [Operations of Engine Unit]

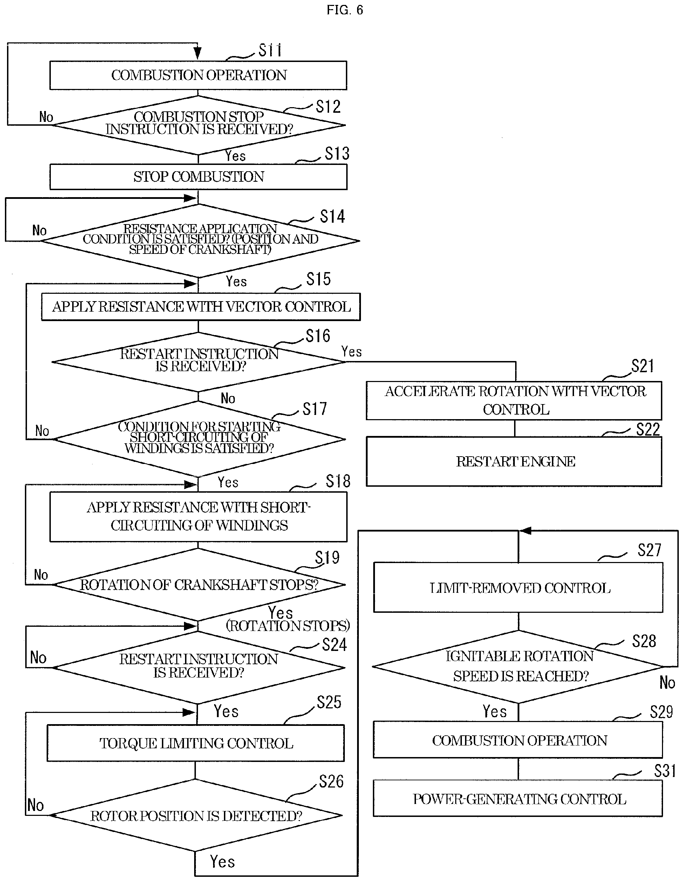

Fig. 6 is a flowchart illustrating an operation of the engine unit EU shown in Fig. 1.

A stop operation for stopping the engine unit EU, which is illustrated herein, begins when the engine unit EU is in a combustion operation (step S11).

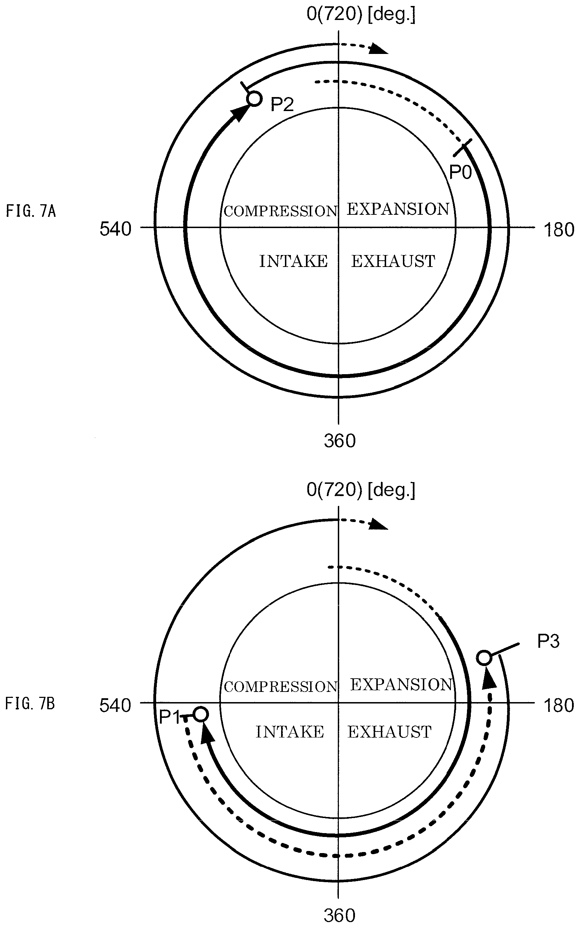

Fig. 7A illustrates a movement of the crankshaft 5 of the engine unit EU shown in Fig. 1. Fig. 7B shows a comparative example illustrating a movement of the crankshaft in reverse rotation.

With reference to Figs. 6 and 7A, the operation of the engine unit EU will be described, beginning with the stage of a combustion stop.

The combustion operation state is, for example, an idling state. The idling state means the state where the vehicle is stopped with its engine rotating. In the idling state, the engine is free of load and running at a minimum rotation speed. The combustion state will be described below, taking the idling state as an example.

As for a type of vehicle whose engine stops when the vehicle is stopped, it is usual the case that, after a predetermined time period has elapsed since the vehicle was actually stopped, it is determined that the vehicle is stopped, so that the engine is stopped. In this case, the vehicle is stopped with its engine rotating, that is, the vehicle is in the idling state, during a time period from when the vehicle was stopped to when it is determined that the vehicle is stopped.

Under the state where engine unit EU is in the idling state, that is, in the combustion operation (step S11), if no combustion stop instruction is received (step S12: NO), the control device CT continues the combustion operation. If a combustion stop instruction is received (step S12: YES), the control device CT stops the combustion of the engine (step S13). To be exact, the combustion controller 63 stops the combustion of the engine. The combustion stop instruction may be an internal instruction generated in response to the control device CT determining that the vehicle has stopped. Alternatively, the combustion stop instruction may be an external instruction inputted by the rider. After the combustion of the engine is stopped, the crankshaft 5 continues rotating for a while by inertia. The rotation of the crankshaft 5 is detected by the rotor position detection device 50.

While the crankshaft 5 is in forward rotation after the combustion operation of the four-stroke engine body E is stopped (after step S13), the control device CT directs the three-phase brushless motor SG to apply a resistance to the forward rotation of the crankshaft 5, forcing the crankshaft 5 to stop in the compression stroke of the four-stroke engine body E (steps S14 to S19). That is, when the combustion operation of the four-stroke engine body E is stopped in response to a combustion stop instruction (after step S13) and the crankshaft 5 is in forward rotation; the control device CT directs the three-phase brushless motor SG to apply a resistance to the forward rotation of the crankshaft 5, forcing the crankshaft 5 to stop in the compression stroke of the four-stroke engine body E. In detail, when the combustion operation of the four-stroke engine body E is stopped (after step S13) and the crankshaft 5 is in forward rotation; the resistance application unit 625 of the starter motor controller 62 directs the three-phase brushless motor SG to apply a resistance to the forward rotation of the crankshaft 5, forcing the crankshaft 5 to stop in the compression stroke of the four-stroke engine body E.

In more detail, after the combustion operation of the four-stroke engine body E is stopped, based on the rotation speed of the crankshaft 5 and the position of the crankshaft 5, the control device CT directs the three-phase brushless motor SG to oprerate such that a resistance is applied to the forward rotation of the crankshaft 5. To be specific, the control device CT starts to apply a resistance to the forward rotation based on the rotation speed of the crankshaft 5 and the position of the crankshaft 5. If the rotation speed and the position of the crankshaft 5 satisfy a resistance application condition which is predefined (step S14: YES), the control device CT directs the three-phase brushless motor SG to apply a resistance to the forward rotation of the crankshaft 5 (step S15). The resistance application condition is, for example, a condition that the rotation speed of the crankshaft 5 be less than a predetermined threshold value and the crankshaft 5 be passing a predetermined position. The predetermined position is a position in the four strokes. For example, the predetermined position is a position past the compression top dead center and before the compression stroke with respect to the forward rotation direction. The predetermined threshold value of the rotation speed is, for example, a speed value that would enable the crankshaft 5 to stop in the compression stroke if the resistance is applied to the forward rotation of the crankshaft 5.

The control device CT detects the position and the rotation speed of the crankshaft 5 based on a signal supplied from the rotor position detection device 50. Here, it is also acceptable that, for example, the control device CT detects the position and the rotation speed of the crankshaft 5 based on a signal supplied from a device or sensor different from the rotor position detection device 50.

Fig. 7A illustrates a situation where, after the combustion operation of the four-stroke engine body E is stopped, the crankshaft 5 passes through a predetermined position P0 in the expansion stroke, which triggers application of a resistance to the forward rotation of the crankshaft 5, so that the crankshaft 5 stops in a position P2 in the compression stroke. The resistance application is implemented when the crankshaft 5 is past the position P0 with respect to the forward rotation direction.

In the engine unit EU, the state of rotation of the crankshaft 5 at a time when the combustion stop instruction is received is not constant but it varies as each combustion stop instruction is received. That is, there is a variation in the position and the rotation speed of the crankshaft 5 at a time when the combustion stop instruction is received. The control device CT applies a resistance to forward rotation of the crankshaft 5 based on the rotation speed of the crankshaft 5 and the position of the crankshaft 5. Since the resistance application by the control device CT to the forward rotation of the crankshaft 5 is based on the rotation speed of the crankshaft 5 and the position of the crankshaft 5, the variation in the stop position of the crankshaft 5 is less influential, and therefore making the four-stroke engine body stop at a target position is less difficult.

To apply a resistance to the forward rotation of the crankshaft 5, the control device CT of this embodiment implements both resistance application with a vector control performed on the three-phase brushless motor SG and resistance application with short-circuiting of the stator windings W. The control device CT switches from one to the other of the resistance application with the vector control on the three-phase brushless motor SG and the resistance application with the short-circuiting of the stator windings W. The control device CT first implements the resistance application with the vector control on the three-phase brushless motor SG. The control device CT switches from the resistance application with the vector control to the resistance application with the short-circuiting of the stator windings W.

In step S15, the control device CT performs a vector control on the three-phase brushless motor SG, such that a resistance is applied to the forward rotation of the crankshaft 5 by the three-phase brushless motor SG. The control device CT performing the vector control on the three-phase brushless motor SG is, to be more precise, the control device CT controlling the plurality of switching parts 611 to 616 so as to perform the vector control on the three-phase brushless motor SG. Therefore, the vector control on the three-phase brushless motor SG will be also referred to as the vector control on the plurality of switching parts 611 to 616.

The control device CT controls the plurality of switching parts 611 to 616 such that the three-phase brushless motor SG gives a reverse-rotation driving force to the crankshaft 5.

The vector control is a control method in which a current of the generator SG is divided into d-axis component and q-axis component, the d-axis component corresponding to a magnetic flux direction of the magnet, the q-axis component being orthogonal to the magnetic flux direction in terms of electrical angle. The q-axis component is a component that affects a torque load of the generator SG. The vector control is a control in which each phase of the multi-phase stator windings W is rendered conducting without any pause of the conduction. The vector control is a control in which conduction is effected such that a sine-wave current flows through each phase of the multi-phase stator windings W. Performing on/off-operation of the plurality of switching parts 611 to 616 at timings based on the vector control causes a sine-wave current to flow through each of the multi-phase stator windings W.

The resistance application to rotation of the crankshaft with the vector control is implemented by, for example, passing a current in the direction of an induced electromotive voltage of the stator windings W, the current being passed in synchronization with a sine wave of this induced electromotive voltage. In other words, the resistance application to rotation of the crankshaft with the vector control is implemented by, for example, drawing a current in the direction of the induced electromotive voltage.

The control device CT applies a resistance to rotation of the crankshaft 5 with the vector control such that the three-phase brushless motor SG generates power to charge the battery 14. Herein, a sine-wave current and a sine-wave voltage mean a current and a voltage having sinusoidal shapes. The sine-wave current contains, for example, a distortion and a ripple caused by the on/off-operation of the switching parts.

In the vector control, each of the plurality of switching parts 611 to 616 is controlled by a pulse-width-modulated (PWM) signal. A pulse cycle in the pulse width modulation is shorter than a cycle of the induced electromotive voltage of each phase of the stator windings W. That is, the control device CT controls on/off the plurality of switching parts 611 to 616 in accordance with a pulse signal whose cycle is shorter than the cycle of the induced electromotive voltage of the stator windings W of the generator SG.

In the vector control, the control device CT obtains d-axis component and q-axis component from a current in the multi-phase stator windings W, which is detected by a sensor (not shown), and the position of the outer rotor 30, which is detected by the rotor position detection device 50. Based on the components being corrected to target values, the control device CT controls on/off timings for the plurality of switching parts 611 to 616.

In some methods adoptable for the control, a current in the stator windings of only part of the phases may be detected, or the position detection performed by the rotor position detection device 50 may be omitted. In another method adoptable for the control, the plurality of switching parts 611 to 616 may be controlled without detection of a current in stator winding of any phase. In such a case, the control device CT estimates a current that would be synchronized with the sine wave of the induced electromotive voltage of the stator windings W based on the position of the outer rotor 30 detected by the rotor position detection device 50, and applies, to the stator windings W, a voltage for causing the estimated current to flow. For example, the control device CT uses a map (setting table) indicative of correspondence between the position of the outer rotor 30 and the pulse cycle, to control the plurality of switching parts 611 to 616 based on the position of the outer rotor 30. The map has been preliminarily set through a process of estimating, relative to the position of the outer rotor 30, a voltage for causing a current that would be synchronized with the sine wave of the induced electromotive voltage to flow.

In some methods adoptable for controlling the on/off timings, for example, a formula may be calculated by using information received, or a map (setting table) stored in the on/off-operation storage unit 623 may be read out and referred to. The formula or map may be included in a program. It may be also acceptable that the control device CT performs the control by using the initial operation unit 624 configured as an electronic circuit (wired logic).

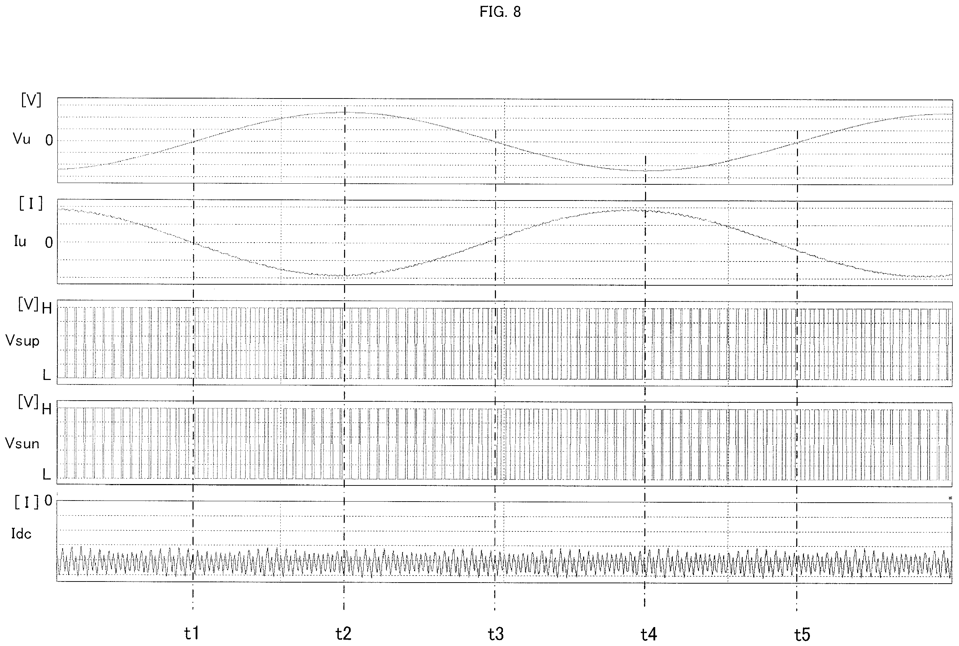

Fig. 8 shows exemplary current and voltage waveforms in the vector control.

In Fig. 8, Vu represents an induced electromotive voltage of the stator winding W corresponding to U-phase among the multi-phase stator windings W of the three-phase brushless motor SG. Iu represents a current in the stator winding W corresponding to U-phase. In Fig. 8, a positive value of Iu represents a current flowing from the switching parts 611, 612 to the stator winding W. A negative value of Iu represents a current flowing from the stator winding W to the switching parts 611, 612.

Vsup and Vsun represent control signals for, among the plurality of switching parts 611 to 616, the two switching parts 611, 612 that are connected to the stator winding W corresponding to U-phase. Vsup represents a control signal for the positive-side switching part 611 arranged between the stator winding W corresponding to U-phase and the positive electrode of the battery 14. Vsun represents a control signal for the negative-side switching part 612 arranged between the stator winding W corresponding to U-phase and the negative electrode of the battery 14. The H level of Vsup, Vsun represents an on-state of the switching parts 611, 612. The L level represents an off-state. Idc represents a current flowing through the battery 14. A negative value of Idc, that is, a value below "0" in Fig. 8, indicates that the three-phase brushless motor SG generates power so that the battery 14 is charged.

As indicated by the control signals Vsup, Vsun for the switching parts 611, 612, the positive-side switching part 611 and the negative-side switching part 612 are in opposite states under the on-state and the off-state.

The control device CT controls the on/off duty cycle of the switching parts 611, 612 such that a sine-wave current flows through each phase of the stator windings W. The control device CT controls the switching parts 611, 612 such that the cycle of variation of the on/off duty cycle of the switching parts 611, 612 coincides with the cycle of the induced electromotive voltage of the stator winding W. The induced electromotive voltage of the stator winding W has a sine wave which repeats a median "0" (timing t1, t5), a positive maximum (timing t2), a median "0" (timing t3), and a negative maximum (timing t4).

In the vector control, the control device CT controls the switching parts 611, 612 as follows. A difference between the duty cycle of the positive-side switching part 611 and the duty cycle of the negative-side switching part 612 at a timing (t2, t4) when the induced electromotive voltage Vu of the stator winding W has the positive maximum or the negative maximum is greater than a difference between the duty cycle of the positive-side switching part 611 and the duty cycle of the negative-side switching part 612 at a timing (t1, t3, t5) when the induced electromotive voltage Vu has the median ("0").

For example, at the timing (t1, t3, t5) when the induced electromotive voltage Vu of the stator winding W corresponding to U-phase has the median ("0"), both of the duty cycles of the positive-side switching part 611 and the negative-side switching part 612 are, for example, almost 50% of those obtained at the timing (t2, t4). Therefore, the difference between the duty cycle of the positive-side switching part 611 and the duty cycle of the negative-side switching part 612 is small. As a result, the current in the stator winding W corresponding to U-phase is reduced.

The duty cycles of the switching parts 611, 612 directly affect a voltage supplied from the battery 14 to the stator winding W. Due to an inductance component of the stator winding W, a delay occurs between the voltage and current. This is why there is a slight gap between a variation in the duty cycle and a variation in the current. The vector control, however, can improve a power factor for the current Iu flowing through the stator winding W and the induced electromotive voltage Vu.

The description about U-phase given above is applied to V-phase and W-phase, too. The voltages and currents of V-phase and W-phase have phase differences of 120 degrees and 240 degrees relative to U-phase, respectively.

The vector control enables the current flowing through the stator winding W to be controlled relative to the induced electromotive voltage Vu so as to obtain an enhanced power factor, as shown in Fig. 8 for example. As a result, a high resistance occurs to the rotation of the crankshaft 5. The resistance application to the rotation of the crankshaft 5 with the vector control produces a strong braking force to the rotation of the crankshaft 5. Accordingly, it is easy to stop the crankshaft 5 at a position that allows the four-stroke engine body E to be readily started with a low output torque.

If a condition for starting short-circuiting of the windings is satisfied (step S17: YES), the control device CT switches the control mode from the resistance application with the vector control (step S15) to the resistance application with short-circuiting of the stator windings W (step S18). To be precise, the short-circuiting of the stator windings W is short-circuiting of terminals of the stator windings W.

In step S18, the control device CT controls the switching parts 611 to 616 so as to short-circuit the terminals of the plurality of stator windings W. This control is performed during forward rotation of the crankshaft 5 after the combustion operation of the four-stroke engine body E is stopped. This is how the control device CT directs the three-phase brushless motor SG to apply a resistance to the forward rotation of the crankshaft 5, forcing the crankshaft 5 to stop in the compression stroke.

In more detail, if the condition for starting short-circuiting of the windings is satisfied (step S17: YES), the control device CT applies a resistance to rotation of the crankshaft 5 by short-circuiting the stator windings W (step S18). The condition for starting short-circuiting of the windings (step S17) is, for example, a condition that the rotation speed of the crankshaft 5 be less than a predetermined threshold value. This threshold value is smaller than the threshold value adopted as the condition for starting the resistance application to forward rotation in step S14 above. A condition that the position of the crankshaft 5 be within a predetermined range is also adoptable as the condition for starting the control to short-circuit the windings.

The control device CT short-circuits the terminals of the three-phase stator windings W of the switching parts 611 to 616. In one example, the control device CT brings the negative-side switching parts 612, 614, 616 into on-state concurrently. This results in short-circuiting of the terminals of the stator windings W.

If the short-circuiting of the stator windings W occurs, a current flows through the stator windings W due to the induced electromotive voltage of the stator windings W. The current flowing through the stator windings W makes the three-phase brushless motor SG generate a resistance to rotation of the crankshaft 5.

Since a resistance force generated by the short-circuiting of the stator windings W is derived from the induced electromotive voltage of the stator windings W, the resistance force increases as the rotation speed of the crankshaft 5 increases and decreases as the rotation speed of the crankshaft 5 decreases. Therefore, when the rotation speed of the crankshaft 5 is high, the resistance force is high so that the rotation of the crankshaft 5 rapidly decelerates. As the rotation speed of the crankshaft decreases, the resistance force decreases.

Meanwhile, the crankshaft 5 suffers a resistance against its rotation caused by a reaction force of gas compression in the compression stroke. A resistance force generated by the reaction force of compression increases as the crankshaft 5 driven in forward rotation approaches the compression top dead center. Thus, the resistance force against rotation generated by the short-circuiting of the stator windings W gradually decreases as the crankshaft 5 decelerates in the compression stroke, whereas the resistance force generated by the reaction force of compression increases as the rotation of the crankshaft 5 progresses in the compression stroke. A balance between the decrease of the resistance force generated by the short-circuiting of the stator windings W and the increase of the resistance force generated by the reaction force of compression can be used to easily stop the crankshaft 5 at a position that allows the crankshaft 5 to readily start movement with a low torque.

The control device CT determines whether or not the rotation of the crankshaft 5 stops based on the signal outputted from the rotor position detection device 50 (step S19). In this embodiment, the rotor position detection device 50 detects a variation in the electromotive force caused along with passing of the detection object parts 38. Therefore, once the rotation of the crankshaft 5 is slowed so that the variation in the electromotive force is reduced, the rotor position detection device 50 of this embodiment can no longer detect the rotation of the crankshaft 5. As long as at least the rotor position detection device 50 detects rotation of the crankshaft 5, the crankshaft 5 can be considered as rotating. The rotor position detection device 50 is not limited to the one illustrated in this embodiment, but it may be configured to, for example, detect rotation of the crankshaft 5 until the rotation of the crankshaft 5 stops.

If the rotation of the crankshaft 5 stops (step S19: YES), the control device CT waits for reception of a start instruction, i.e., a restart instruction (step S24).

In response to reception of the start instruction under the state where the crankshaft 5 is stopped, the control device CT controls the plurality of switching parts 611 to 616, to direct the three-phase brushless motor SG to start forward rotation of the crankshaft 5 (step S25 to S27). In more detail, under the state where the crankshaft 5 is stopped, the torque limiting unit 621 and the acceleration control unit 622 of the starter motor controller 62 control the plurality of switching parts 611 to 616 in response to reception of the start instruction, to direct the three-phase brushless motor SG to start forward rotation of the crankshaft 5 (step S25 to S27). The start of forward rotation of the crankshaft 5, which is conducted by the control device CT, begins at the position where the crankshaft 5 has been stopped in the compression stroke.

The start instruction is inputted from the starter switch 16 to the control device CT when, for example, the starter switch 16 is operated. In a case where the engine unit EU has an idling stop function, the control device CT itself executes the start instruction by determining whether or not a predefined engine start condition is satisfied. Achievement of the predefined engine start condition is included in the reception of the start instruction. The predefined engine start condition is, for example, activation of an acceleration operator (not shown).

If a start instruction is received (step S24: Yes), the control device CT directs the three-phase brushless motor SG to rotate the crankshaft 5, to start the four-stroke engine body E (step S25). To be more specific, the torque limiting unit 621 of the starter motor controller 62 directs the three-phase brushless motor SG to rotate the crankshaft 5, to start the four-stroke engine body E (step S25).

Fig. 7A illustrates a situation where rotation of the crankshaft 5 is started from a position P2 in the compression stroke, which is the position where the crankshaft 5 has been stopped.

In step S25, the control device CT drives the crankshaft 5 in forward rotation from the compression stroke while causing the three-phase brushless motor SG to rotate with a torque lower than a maximum torque obtainable from the battery 14. During at least part of a time period from when the crankshaft 5 starts the forward rotation to when the crankshaft 5 reaches the end of the compression stroke, the control device CT continuously performs a control of limiting the output torque of the three-phase brushless motor SG. In more detail, the control device CT first performs a torque limiting control (step S25). To be more precise, the torque limiting unit 621 of the starter motor controller 62 performs on/off-operation of the plurality of switching parts 611 to 616 at predefined timings. The starter motor controller 62 performs an open-loop control for the on/off-operation of the switching parts 611 to 616. That is, the starter motor controller 62 renders the multi-phase stator windings W conducting one after another at the predefined timings instead of adopting a feedback control based on the position of the outer rotor 30. Performing the on/off-operation of the plurality of switching parts 611 to 616 at the predefined timings by the torque limiting unit 621 of the starter motor controller 62 (control device CT) allows the crankshaft 5 to rotate with a torque lower than the maximum torque obtainable from the battery 14.

After the crankshaft 5 starts the forward rotation and then the rotor position detection device 50 detects the position of the outer rotor 30 (step S26: Yes), the control device CT performs a limit-removed control (step S27). To be more precise, the acceleration control unit 622 of the starter motor controller 62 performs the limit-removed control. In a case where the position of the outer rotor 30 is detected before the end of the compression stroke, the torque limiting control is performed in part of the range up to the end of the compression stroke. It may be acceptable that the torque limiting control is performed even after the compression stroke. In the limit-removed control, the control device CT removes the limit put on the output torque of the three-phase brushless motor SG. To be more precise, the acceleration control unit 622 of the starter motor controller 62 removes the limit put on the output torque of the three-phase brushless motor SG.

In the limit-removed control (step S27) of this embodiment, the control device CT renders the plurality of stator windings W conducting one after another at timings in accordance with the position of the outer rotor 30, in order to remove the limit put on the output torque. In other words, the control device CT renders the multi-phase stator windings W conducting one after another with the feedback control based on the position of the outer rotor 30. As a result, the limit put on the output torque of the three-phase brushless motor SG is removed, and the maximum torque that would be obtained when the crankshaft 5 is driven in forward rotation in response to reception of a start instruction is exerted. At this time, the control device CT causes the three-phase brushless motor SG to rotate with the maximum torque obtainable from the battery 14. By performing the limit-removed control (step S27), the control device CT shifts its mode to a mode of accelerating the rotation of the outer rotor 30.

In the acceleration of the rotation of the outer rotor 30, the control device CT performs the vector control on the plurality of switching parts 611 to 616 of the inverter 61 such that power is supplied from the battery 14 to the three-phase brushless motor SG. That is, the control device CT performs the vector control on the three-phase brushless motor SG such that power is supplied from the battery 14 to the three-phase brushless motor SG. The vector control has 180-degree conduction.

The acceleration of the rotation of the crankshaft 5 with the vector control is implemented by, for example, passing a current in the direction opposite to the direction of the sine wave of the induced electromotive voltage of the stator windings W, the current being passed in synchronization with the sine wave. In other words, the acceleration of the rotation of the crankshaft 5 with the vector control is implemented by, for example, passing a current from the battery 14 to the stator windings W so as to overcome the induced electromotive voltage of the stator windings W. In the acceleration of the rotation of the crankshaft 5 with the vector control, for example, the current Iu has a shape of an inverted version of the current Iu shown in Fig. 8.

Then, if the rotation speed of the crankshaft 5 is higher than a predetermined ignitable rotation speed (step S28: Yes), the control device CT starts the combustion operation of the four-stroke engine body E (step S29). In more detail, the combustion controller 63 of the control device CT controls the combustion operation of the four-stroke engine body E by controlling the spark plug 29. In a case where the four-stroke engine body E includes a fuel injector that injects a fuel for generation of a mixed gas, the combustion controller 63 also controls injection of the fuel injector to control the combustion operation of the four-stroke engine body E. Starting the combustion operation of the four-stroke engine body E includes evaluating whether or not the combustion operation is successful. Whether or not the combustion operation is successful is determined by, for example, measuring the rotation speed of the crankshaft 5 while the crankshaft 5 is rotated a plurality of times and evaluating whether or not the measured rotation speed is higher than a value defined as a value that would be obtained if the combustion operation is successful.

After the control device CT of this embodiment starts the combustion operation of the four-stroke engine body E by driving the crankshaft 5 in forward rotation in response to reception of the start instruction, the control device CT still accelerates the forward rotation of the crankshaft 5 (step S29). More specifically, after starting the combustion operation of the four-stroke engine body E including evaluation of whether or not the combustion operation is successful, the three-phase brushless motor SG continuously accelerates the rotation of the crankshaft 5. For a predefined time period following the start of the combustion operation, the control device CT controls the plurality of switching parts 611 to 616 of the inverter 61 such that power is supplied from the battery 14 to the three-phase brushless motor SG. That is, the control device CT causes motoring of the three-phase brushless motor SG. This provides a greater acceleration to the rotation of the crankshaft 5 than when no power is supplied from the battery 14 to the three-phase brushless motor SG. Thus, an increased acceleration is given to the rotation of the crankshaft 5, as compared with rotation energized only by the combustion operation of the four-stroke engine body E. The control device CT performs the vector control on the plurality of switching parts 611 to 616 of the inverter 61 such that power is supplied from the battery 14 to the three-phase brushless motor SG, to accelerate the rotation of the crankshaft 5.

The stability of rotation of the crankshaft 5 may be sometimes poor after the four-stroke engine body E starts the combustion operation. After the combustion of the four-stroke engine body is started, the three-phase brushless motor SG continuously accelerates the forward rotation of the crankshaft 5, so that the forward rotation of the crankshaft 5 rotated by the combustion of the four-stroke engine body is stabilized. Further acceleration of the forward rotation of the crankshaft is obtained because the vector control is continued around the time when the combustion of the four-stroke engine body is started. Here, the predefined time period is set to be a length of time (time duration) sufficient for stabilizing the rotation of the crankshaft 5. For example, the predefined time period is set to be a length of time sufficient for the rotation speed of the crankshaft 5 to reach an idle rotation speed.

When, for example, it is required that the vehicle be accelerated after the start of the combustion of the four-stroke engine body E, the acceleration of the forward rotation of the crankshaft 5 assists acceleration of the vehicle. When acceleration is required under a state where the three-phase brushless motor SG is generating power, the control device CT switches the control of the three-phase brushless motor SG from a power-generating control to a motoring control, thus accelerating the forward rotation of the crankshaft 5.

As thus far described, the control device CT accelerates the forward rotation of the crankshaft 5 for the predefined time period after the start of the four-stroke engine body E is completed. This provides stabilization of the forward rotation of the crankshaft 5 rotated by the combustion operation of the four-stroke engine body E. This also provides more rapid acceleration of the forward rotation of the crankshaft 5.

After the four-stroke engine body E is started, the three-phase brushless motor SG is rotated along with rotation of the crankshaft 5, to function as a generator that generates a current for charging the battery 14. More specifically, upon start of the combustion of the four-stroke engine body E (step S31), the three-phase brushless motor SG driven by the four-stroke engine body E functions as a generator. The control device CT performs on/off-operation of the plurality of switching parts 611 to 616, to control the current supplied from the plurality of stator windings W to the battery 14. The control device CT performs the on/off-operation of the plurality of switching parts 611 to 616 based on an electrical signal in the detection-purpose winding 51 of the rotor position detection device 50.

Fig. 7B shows a comparative example departing from the claimed invention, illustrating a movement of the crankshaft in reverse rotation.

In the example shown in Fig. 7B, the crankshaft stops at, for example, a stop position P1 after the combustion operation of the four-stroke engine body is stopped. In the comparative example shown in Fig. 7B, inhibition of the rotation of the crankshaft by a resistance does not occur after the combustion operation is stopped. Therefore, the position where the rotation of the crankshaft stops is not always P1. In the example shown in Fig. 7B, after the rotation of the crankshaft stops, the crankshaft is driven in reverse rotation up to a position P3 located in the expansion stroke. In response to reception of a start instruction, the crankshaft starts forward rotation from the position P3 located in the expansion stroke.

In this embodiment, as in the example shown in Fig. 7A, rotation of the crankshaft 5 does not occur during a period from when the combustion operation of the four-stroke engine body is stopped so that the rotation of the crankshaft 5 stops to when forward rotation of the crankshaft 5 is started to start the four-stroke engine body. In this embodiment, no reverse rotation of the crankshaft 5 is performed before forward rotation of the crankshaft 5 is started to start the four-stroke engine body.

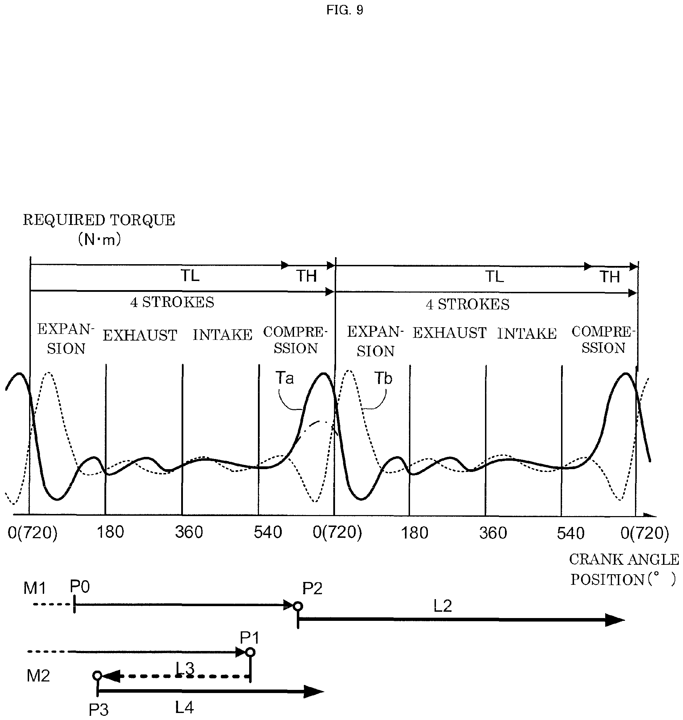

Fig. 9 is an illustrative diagram schematically showing the relationship between a crank angle position and a required torque.

In Fig. 9, the solid line indicates a required torque Ta for forward rotation. The high-load region TH locates in the compression stroke and close to the compression top dead center (where the crank angle position is at zero degree). The low-load region TL is included in the intake stroke, the expansion stroke, and the exhaust stroke.

In Fig. 9, the broken line indicates a required torque Tb for reverse rotation. As indicated by the broken line in Fig. 9, in a case of reverse rotation of the crankshaft, the high-load region is included in the expansion stroke instead of the compression stroke.

Fig. 9 shows, below the graph, a movement M1 of the crankshaft in forward rotation illustrated in Fig. 7A, and a movement M2 of the crankshaft in reverse rotation according to the comparative example illustrated in Fig. 7B.

The movement M2 of the crankshaft in reverse rotation according to the comparative example will be described.

If the crankshaft stops at a position in the compression stroke or at the stop position P1 near the compression stroke after the combustion operation of the four-stroke engine body is stopped; the crankshaft moves in reverse rotation up to the position P3 located in the expansion stroke, and then stops. Subsequently, in response to reception of a start instruction, the crankshaft moves in forward rotation, so that the rotation speed of the crankshaft is increased before the crankshaft reaches the high-load region.

In the comparative example, after the combustion operation is stopped and the crankshaft stops, the crankshaft is driven in reverse rotation through a zone including the intake stroke and the exhaust stroke to lead to the expansion stroke. In a case of reverse rotation of the crankshaft, the high-load region occurs in the expansion stroke. If the crankshaft overcame a highest-load position in the high-load region during reverse rotation of the crankshaft, the crankshaft would move to the compression stroke. Such a movement to the compression stroke of the crankshaft driven in reverse rotation makes the reverse rotation no longer advantageous, and, what is even worse, requires power and time for causing a transition from the reverse rotation to the forward rotation. Accordingly, driving the crankshaft in reverse rotation involves the need to avoid a situation where the crankshaft moves to the compression stroke. For this purpose, the crankshaft cannot be brought sufficiently close to the highest-load position located near the compression top dead center (zero degree). Since it is difficult to bring the crankshaft sufficiently close to the highest-load position in the reverse rotation of the crankshaft, a distance L4 is short through which the crankshaft moves in forward rotation from the position P3, which is a position where the forward rotation begins in response to reception of a start instruction, to the highest-load position. This results in a relatively low inertial force obtained from the forward rotation caused in response to reception of the start instruction.

In this embodiment, on the other hand, after the combustion operation of the four-stroke engine body and the forward rotation of the crankshaft 5 are stopped, the three-phase brushless motor SG applies a resistance to the forward rotation of the crankshaft 5, so that the crankshaft 5 stops at the position P2 in the compression stroke.

Then, in response to reception of a start instruction, the crankshaft 5 starts rotation. At this time, the crankshaft 5 gradually increases the speed from the stopped state. The crankshaft 5, which has started forward rotation from the position P2 located in the compression stroke, passes through the compression stroke at a low speed after the start of rotation. Since the crankshaft 5 passes through the compression stroke at a low speed, the crankshaft 5 is less likely to be affected by a reaction force of gas compression. This enables the crankshaft 5 to promptly overcome a load of the high-load region in the compression stroke. After passing through the compression stroke, the crankshaft moves in forward rotation over the low-load region which is a wide region ranging from the expansion stroke to the compression stroke, until reaching the high-load region for the second time. That is, a long run-up zone L2 is ensured for acceleration. Therefore, the three-phase brushless motor SG is able to increase the rotation speed of the crankshaft 5 before the crankshaft 5 reaches the high-load region for the second time. Thus, both a high inertial force generated by the high rotation speed and the output torque of the three-phase brushless motor can be used to overcome the high-load region encountered for the second time. Accordingly, suppression of the output torque of the three-phase brushless motor SG is permitted, and therefore downsizing of the three-phase brushless motor is permitted. The position P2 is a position that allows the four-stroke engine body E to be started with a low output torque. The position P2 is a position located in the compression stroke. The position P2 is, for example, a position located in the compression stroke and close to the compression top dead center.

To stop that the crankshaft 5 at the position P2 in the compression stroke after the combustion operation of the four-stroke engine body is stopped, controlling the movement of the crankshaft to the position P2 is an easier way than, for example, causing forward rotation by using an inertial force generated by the combustion operation of the four-stroke engine body E. Therefore, the crankshaft can be moved to the position that allows the four-stroke engine body E to be readily started with a low output torque.

Accordingly, the engine unit EU of this embodiment permits a reduced output torque of the three-phase brushless motor SG, and thus permits downsizing of the three-phase brushless motor. As a result, the mountability to vehicle can be improved.

To start the four-stroke engine body E, the control device CT drives the crankshaft 5 in forward rotation from the compression stroke while causing the three-phase brushless motor SG to rotate with a torque lower than the maximum torque obtainable from the battery 14 (step S15 in Fig. 6). In at least part of the range from the start point of the forward rotation of the crankshaft 5 to the end of the compression stroke, the control device CT causes the three-phase brushless motor SG to rotate with a torque lower than the maximum torque obtainable from the battery 14. Therefore, at the time of starting the four-stroke engine body E, the forward rotation of the crankshaft 5 is started from the compression stroke at a lower speed than the speed obtained when, for example, rotation is caused with the maximum torque obtainable from the battery 14. This makes it still easier for the crankshaft 5 to overcome the load of the high-load region in the compression stroke. The reason why such a low speed enables the crankshaft 5 to easily overcome the load is considered to be because it increases the amount of gas leaking out of the combustion chamber of the four-stroke engine body E so that the amount of load caused by a reaction force of compression decreases.

The crankshaft 5 having passed through, at least, the compression stroke moves in forward rotation substantially over the entire low-load region ranging from the expansion stroke to the compression stroke, and then reaches the high-load region for the second time. Here, the crankshaft 5 is able to overcome the second high-load region by using both the high inertial force generated by the high rotation speed and the output torque of the three-phase brushless motor SG.

The number of the magnetic pole faces 37a included in the rotor 30 of the three-phase brushless motor SG is more than 2/3 of the number of the teeth 43. The more the number of the magnetic pole faces 37a is, the more frequently the voltage varies that is applied to each of the windings W under control of the switching parts 611 to 616 by the control device CT. For example, assuming that a voltage having a pulsed waveform is applied to each of the windings W, the pulse frequency is high. Since the voltage applied to each of the windings W has a high frequency, the torque that the three-phase brushless motor SG applies to drive the crankshaft 5 in forward rotation has a high-frequency pulsation. The crankshaft 5 subjected to the torque having such a high-frequency pulsation is able to easily overcome the load of the high-load region.

After the four-stroke engine body E is started, the three-phase brushless motor SG is rotated along with rotation of the crankshaft 5, to function as a generator that generates a current for charging the battery 14. In a case of the three-phase brushless motor SG serving also as a generator, its stator windings W are under structural restrictions because the three-phase brushless motor SG has to charge the battery 14. For example, the need to avoid an excessive charging current arises, which leads to restricting the performance of the three-phase brushless motor SG.

In this embodiment, however, the crankshaft 5 reaches the highest-load position at a low rotation speed produced from an output torque lower than the maximum torque, and is accelerated through a sufficiently long zone before reaching the highest-load position for the second time. This enables a load of the highest-load position encountered for the second time to be overcome even if the performance of the three-phase brushless motor SG is restricted. Accordingly, downsizing of the three-phase brushless motor SG is permitted with achievement of a simple configuration in which the three-phase brushless motor SG serves as both a starter motor and a generator.

Referring to Fig. 6 again, a description will be given of a case where a restart instruction is received while a resistance is applied to rotation of the crankshaft 5 after combustion was stopped.

Under the state where a resistance is applied to rotation of the crankshaft 5 after combustion is stopped (step S15); if a restart instruction is received (step S16: YES), the control device CT accelerates the rotation of the crankshaft 5 by performing the vector control (step S21). More specifically, the control device CT shifts the control from applying the resistance to the rotation of the crankshaft 5 with the vector control to accelerating the rotation of the crankshaft 5 with the vector control. To be more precise, the acceleration control unit 622 of the starter motor controller 62 accelerates the rotation of the crankshaft 5 by performing the vector control. At this time, the control device CT continues the vector control. Then, the control device CT restarts the engine (step S22).

The acceleration of the rotation of the crankshaft 5 with the vector control is implemented by, for example, passing a current in the direction opposite to the direction of the sine wave of the induced electromotive voltage of the stator windings W, the current being passed in synchronization with the sine wave. In other words, the acceleration of the rotation of the crankshaft 5 with the vector control is implemented by, for example, passing a current from the battery 14 to the stator windings W so as to overcome the induced electromotive voltage of the stator windings W.

The shifting from the resistance application to the rotation of the crankshaft 5 with the vector control (step S15) to the acceleration of the rotation of the crankshaft 5 with the vector control (step S21) does not involve any change in the control type. The shifting of the control state can be promptly implemented by, for example, changing a parameter such as a command value. The shifting of the control state is implemented by, for example, shifting the phase of the current in the multi-phase stator windings W relative to the phase of the induced electromotive voltage. For example, the shifting of the control state can be implemented by changing, among control values used in the vector control, the value of the q-axis component current, which contributes to the torque, from the positive value to the negative value.

Accordingly, the shifting from the state where the resistance is applied to the rotation of the crankshaft 5 to the state where the rotation of the crankshaft 5 is accelerated, in other words, from the power generating state to the motoring state, can be implemented immediately.

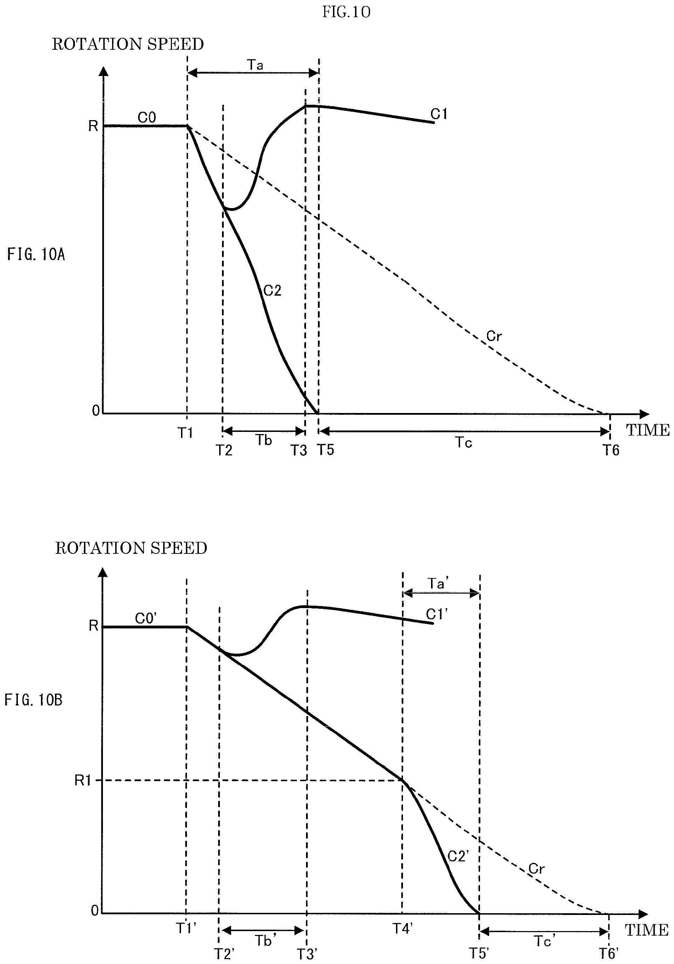

Fig. 10A is a graph showing a variation in the engine rotation speed during a time period from when combustion of the engine is stopped to when the engine is restarted in the engine unit EU of this embodiment. Fig. 10B is a graph showing a variation in the engine rotation speed during a time period from when combustion of an engine is stopped to when the engine is restarted in an engine unit having no vector control.

Referring to Fig. 10A, upon reception of a combustion stop instruction at a time point T1 under a state where the crankshaft 5 is idling at a rotation speed R(rpm), the control device CT of the engine unit EU of this embodiment stops combustion of the engine and performs the vector control to apply a resistance to the rotation of the crankshaft 5. The control device CT controls a resistance force to be applied to the rotation of the crankshaft 5 with the vector control in accordance with, for example, the rotation speed and the position of the crankshaft 5. As the resistance is applied to the rotation of the crankshaft 5 with the vector control, the rotation speed of the crankshaft 5 starts to decrease. In a period from the time point T1 to a time point T2, the crankshaft 5 is rotating under the state where the resistance is applied to the rotation of the crankshaft 5. The rotation speed of the crankshaft 5 gradually decreases. The variation in the rotation speed so far is indicated by the reference sign C0 in Fig. 10A.

Upon reception of a start instruction (restart instruction) at the time point T2, the control device CT performs the vector control to accelerate the rotation of the crankshaft 5. The rotation speed of the crankshaft 5 starts to increase. In a period from the time point T2 to a time point T3, the rotation speed of the crankshaft 5 gradually increases. Once reaching the time point T3, the rotation speed of the crankshaft 5 is stabilized. A period from when the acceleration of the rotation of the crankshaft 5 is started to when the rotation speed of the crankshaft 5 is stabilized has a time duration Tb. The variation in the rotation speed so far is indicated by the reference sign C1 in Fig.10A.

If no start instruction is received at the time point T2, the control device CT keeps applying the resistance to the rotation of the crankshaft 5 with the vector control. Consequently, the rotation of the crankshaft 5 stops at a time point T5. A period during which the resistance has been applied to the rotation of the crankshaft 5 with the vector control has a time duration Ta. The variation in the rotation speed so far is indicated by the reference sign C2 in Fig. 10A.

In Fig. 10A, the reference sign Cr indicates, as a reference example, how the rotation speed of the crankshaft 5 would vary if the crankshaft 5 is rotated by inertia over a period from the time point T1 to a time point when the rotation of the crankshaft 5 stops. In the example Cr, the rotation of the crankshaft 5 stops at a time point T6.

This embodiment, which applies the resistance to the rotation of the crankshaft 5 by means of the vector control, achieves a shortened time duration from when combustion of the engine is stopped to when the rotation of the crankshaft 5 stops, as compared with the example Cr. The time duration is shortened by Tc in Fig. 10A.

Next, a modification of this embodiment will be described with reference to Fig. 10B. As is shown in Fig. 10B as well, the crankshaft 5 stops in the compression stroke. The purpose of showing the example of Fig. 10B is not for describing the stop position but for describing the modification of the control method and timing for starting the resistance application to rotation. In the example shown in Fig. 10B, once the rotation speed of the crankshaft reaches R1, a resistance is applied to rotation of the crankshaft 5. The modification shown in Fig. 10B does not adopt the vector control.

In the engine unit with no vector control as shown in Fig. 10B, combustion of the engine stops so that the rotation speed of the crankshaft starts to decrease at a time point T1'. In a period from the time point T1' to a time point T2', the rotation speed of the crankshaft gradually decreases. In Fig. 10B, as compared with Fig. 10A, the decrease of the rotation speed of the crankshaft is slower because the crankshaft is rotated by inertia. The variation in the rotation speed so far is indicated by C0' in Fig. 10B.

Upon reception of a start instruction at the time point T2', the inertial rotation of the crankshaft is switched to acceleration of the rotation of the crankshaft under 120-degree conduction control. In the 120-degree conduction, a conduction period and a non-conduction period are repeated in each of the three phases. The conduction period is a time period corresponding to 120 degrees in electrical angle. The non-conduction period is a time period following the conduction period and corresponding to 60 degrees in electrical angle. Under the 120-degree conduction control, the rotation of the crankshaft is accelerated. Thus, the rotation speed of the crankshaft starts to increase. In a period from the time point T2' to a time point T3', the rotation speed of the crankshaft gradually increases. Once reaching the time point T3', the rotation speed of the crankshaft is stabilized. A period from when the acceleration of the rotation of the crankshaft is started to when the rotation speed of the crankshaft is stabilized has a time duration Tb'. The variation in the rotation speed so far is indicated by C1' in Fig. 10B.

In the example shown in Fig. 10A, the resistance is applied to the rotation of the crankshaft 5 with the vector control. Therefore, as compared with the example shown in Fig. 10B, the amount of decrease of the rotation speed of the crankshaft 5 in the period from the time point T1 to the time point T2 is greater. In the example shown in Fig. 10A, upon reception of the start instruction, the resistance application to the rotation of the crankshaft 5 with the vector control is switched to the acceleration of the rotation of the crankshaft 5 with the vector control. The acceleration of the rotation of the crankshaft 5 with the vector control is additionally performed. Accordingly, the amount of increase of the rotation speed of the crankshaft 5 in the time duration Tb of Fig. 10A is greater than the amount of increase of the rotation speed of the crankshaft 5 in the time duration Tb' of Fig. 10B.

If no start instruction is received at the time point T2', the inertial rotation of the crankshaft continues so that the rotation speed of the crankshaft gradually decreases. At a time point T4' when the rotation speed of the crankshaft reaches R1, the resistance application to the rotation of the crankshaft by means of a phase control is started. Then, the rotation of the crankshaft stops at a time point T5'. A period during which the resistance has been applied to the rotation of the crankshaft with the phase control has a time duration Ta'. The variation in the rotation speed so far is indicated by C2' in Fig. 10B.

In Fig. 10B, a time duration from when combustion of the engine is stopped to when the rotation of the crankshaft 5 stops is shortened as compared with the example Cr. The time duration is shortened by Tc'. The time duration Tc' is shorter than the time duration Tc of Fig. 10A.

In the engine unit EU according to what is shown in Fig. 10A, as compared with Fig. 10B, the length of time required for restarting is shortened in both the case where the engine is restarted before the forward rotation of the crankshaft 5 stops (C1 in Fig. 10) and the case where the engine is restarted after the forward rotation of the crankshaft 5 stops (C2 in Fig. 10). The engine unit EU according to what is shown in Fig. 10A achieves shortening of the length of time required for restarting, without the need to increase the size of the three-phase brushless motor SG.

The engine unit EU of this embodiment includes the four-stroke engine body in which the high-load region and the low-load region occur during four strokes. In the low-load region, inertial rotation of the crankshaft 5 is more likely to continue than in the high-load region. This is why inertial rotation of a crankshaft is more likely to continue in an engine having high-load and low-load regions than in an engine having substantially no low-load region. Therefore, this embodiment, which applies a resistance to rotation of the crankshaft 5 with the vector control, provides a good effect in terms of shortening of the length of time required for restarting.

In the engine unit EU of this embodiment, the low-load region is wider than the high-load region on the basis of the rotation angle of the crankshaft 5 (see Fig. 2). That is, a region where acceleration of rotation of the crankshaft 5 is facilitated is wider. In this embodiment, therefore, shifting from the state where a resistance is applied to rotation of the crankshaft with the vector control to the state where the rotation of the crankshaft is accelerated with the vector control is easy. Accordingly, this embodiment, which is able to easily accelerate the rotation of the crankshaft, achieves further shortening of the length of time required for restarting the engine.

Although the engine unit EU of this embodiment keeps applying the resistance to the rotation of the crankshaft 5 with the vector control over the entire deceleration period (Ta) ranging from the time point (T1) when combustion of the engine is stopped to the time point (T5) when the forward rotation of the crankshaft 5 stops; it suffices in the present invention that the resistance application to the rotation of the crankshaft 5 with the vector control is performed during at least part of the deceleration period (Ta).

In the engine unit EU of this embodiment, the control device CT applies the resistance to the rotation of the crankshaft 5 with the vector control such that power supply from the electricity storage unit to the three-phase brushless motor SG is caused in at least part of the deceleration period (Ta). As mentioned above, the electricity storage unit includes the battery 14 and the capacitor (not shown) provided between the battery 14 and the inverter. Supplying power from the electricity storage unit to the three-phase brushless motor SG and applying the resistance to the rotation of the crankshaft 5 can enhance the braking force, which results in achievement in further shortening of the length of time required for restarting.

In the engine unit EU of this embodiment, the control device CT applies the resistance to the rotation of the crankshaft 5 with the vector control such that the three-phase brushless motor generates power to charge the battery in at least part of the deceleration period (Ta). In this embodiment, the time duration (Ta) in which the resistance is applied to the rotation of the crankshaft 5 with the vector control is longer than the time duration (Ta') of the modification shown in Fig. 10B. Nevertheless, the length of time required for restarting can be shortened with suppression of power consumption, because the battery is charged while the resistance is applied to the rotation of the crankshaft 5 with the vector control.

### [Second Embodiment]

Next, a second embodiment of the present invention will be described. In the description of the second embodiment below, differences from the above-described first embodiment will be mainly described.

In the engine unit EU of the second embodiment, the control device CT performs a phase control instead of the vector control for the resistance application to the forward rotation of the crankshaft 5 in step S15 of Fig. 6. While the crankshaft 5 is in forward rotation after the combustion operation of the four-stroke engine body E is stopped, the control device CT performs the phase control such that a resistance is applied to the forward rotation of the crankshaft 5 by the three-phase brushless motor SG. In the phase control, the control device CT advances or delays the timings at which the plurality of switching parts 611 to 616 are rendered conducting.

The phase control is a control in which the plurality of switching parts 611 to 616 of the inverter 61 are rendered conducting at advanced or delayed timings. The phase control is a control different from the vector control described above. In the phase control, the control device CT performs on/off-operation of each of the plurality of switching parts 611 to 616 with a cycle equal to the cycle of the induced electromotive voltage of the stator winding W. In the phase control, the control device CT switches on/off each of the plurality of switching parts 611 to 616 just one time with a cycle equal to the cycle of the induced electromotive voltage of the stator winding W. The control device CT controls the phase of the on/off-operation of each of the plurality of switching parts 611 to 616 relative to the induced electromotive voltage of the stator winding W.

In the phase control, the on/off duty cycle of the plurality of switching parts 611 to 616 is fixed. Among the plurality of switching parts 611 to 616, the positive-side switching part 611 and the negative-side switching part 612 have equal on/off duty cycles. Each of the plurality of switching parts 611 to 616 has an on/off duty cycle of 50%.

In the phase control, the control device CT advances or delays the timings at which the plurality of switching parts 611 to 616 are rendered conducting, for the control of a current flow between the stator windings W and the battery 14 as well as the control of a resistance application to the forward rotation. The larger the current flowing in the battery 14 is, the higher the resistance applied to forward rotation is. The control device CT advances the on/off phase of the switching parts 611 to 616 relative to the induced electromotive voltage, to reduce the current flowing through the battery 14. The control device CT delays the on/off phase of the switching parts 611 to 616 relative to the induced electromotive voltage, to increase the current flowing through the battery 14. In the phase control, by switching on/off the switching parts 611 to 616, a path of the current outputted from the stator winding W of one phase is changed between the stator winding W of another phase and the battery 14.

In the phase control, the control device CT performs on/off-operation of the switching parts 611 to 616 with a cycle equal to the cycle of the induced electromotive voltage of the stator winding W. Since the control device CT does not use a pulse-width-modulated signal in performing the on/off-operation of the switching parts 611 to 616, the operation is performed at a lower frequency as compared with, for example, the vector control. This allows the switching parts 611 to 616 to be operable with a simple configuration. This also enables a stronger resistance to be applied to the forward rotation of the crankshaft as compared with the short-circuiting of the stator windings W.

### [Motorcycle]

Fig. 11 is a diagram showing an external appearance of a straddled vehicle to which the engine unit EU is mounted.

The vehicle A shown in Fig. 11 includes the engine unit EU in accordance with the first or second embodiment thereof, as described above, a vehicle body 101, wheels 102, 103, and the battery 14. The engine unit EU mounted to the vehicle A drives the wheel 103, which is a drive wheel, so that the wheel 103 is rotated to cause the vehicle A to travel.

The vehicle A shown in Fig. 11, which is equipped with the engine unit having high mountability to vehicle, achieves a compact structure as a whole.

The vehicle A shown in Fig. 11 is a motorcycle. The vehicle of the present invention is not limited to motorcycles. Examples of the vehicle of the present invention include scooter type motorcycles, moped type motorcycles, off-road type motorcycles, and on-road type motorcycles. Straddled vehicles other than motorcycles are also acceptable. For example, ATVs (All-Terrain Vehicles) are acceptable.

In the embodiments, the four-stroke engine body E of air-cooled type is illustrated as an example of the four-stroke engine body. The four-stroke engine body E, however, may be of water-cooled type.

The embodiments illustrate the case where the four-stroke engine body E is a single-cylinder engine. The engine unit of the present invention, however, is not particularly limited as long as the engine unit has a high-load region and a low-load region. Thus, a multi-cylinder engine is also adoptable. Examples of the engine other than the engine illustrated in this embodiment include a straight single-cylinder engine, a parallel double-cylinder engine, a straight double-cylinder engine, a V-type double-cylinder engine, and a horizontal opposed double-cylinder engine. The number of cylinders included in the multi-cylinder engine is not particularly limited. The multi-cylinder engine may be, for example, a four-cylinder engine. Here, some of four-cylinder engines have no low-load region. For example, there is a four-cylinder engine configured such that compression strokes of cylinders occur at equal intervals (a four-cylinder engine configured such that explosion occurs at equal intervals). Such an engine unit having no low-load region does not conform to the definition of the engine unit of the present invention.

In this embodiment, the control device CT performs both the vector control and the short-circuiting of the stator windings W to apply the resistance to forward rotation of the crankshaft 5. Alternatively, the control device of the present invention may perform either one of the vector control and the short-circuiting of the stator windings W to apply the resistance to forward rotation of the crankshaft 5.

In this embodiment, the control device CT applies the resistance to forward rotation of the crankshaft 5 until the rotation of the crankshaft 5 stops.

In this embodiment, the control device CT directs the three-phase brushless motor SG to accelerate the rotation of the crankshaft 5 by performing the vector control on the plurality of switching parts 611 to 616. Alternatively, for example, the control device of the present invention may direct the three-phase brushless motor SG to accelerate the rotation of the crankshaft 5 under 120-degree conduction control.

This embodiment, in which the resistance is applied to forward rotation of the crankshaft 5 based on the rotation speed of the crankshaft 5 and the position of the crankshaft 5, illustrates a specific example in which the resistance application is started if the rotation speed of the crankshaft 5 is less than a predetermined threshold value and the crankshaft 5 has passed the predetermined position. Alternatively, for example, the control device of the present invention may apply a resistance with controlling the resistance by controlling the phase or amplitude of the current flowing to the stator windings W in accordance with the position or rotation speed of the crankshaft.

For example, the control device of the present invention may control the rotation of the crankshaft so as to periodically reflect the position and rotation speed of the crankshaft. Alternatively, the control device may control the rotation of the crankshaft so as to constantly reflect the position and rotation speed of the crankshaft.

In this embodiment, the torque limiting unit 621 and the acceleration control unit 622 start forward rotation of the crankshaft 5 in response to reception of a start instruction under the state where the crankshaft 5 is stopped.

In this embodiment, the control device CT applies the resistance to rotation of the crankshaft 5 by performing the vector control after the combustion operation is stopped, and if a start instruction is received while the crankshaft 5 is rotating, accelerates the rotation of the crankshaft by performing the vector control. In the present invention, however, the combination of a control method for applying the resistance and a control method for accelerating the rotation is not limited to the illustrated one. For example, a combination of resistance application to rotation with a phase control and acceleration with a vector control is adoptable. Alternatively, resistance application to rotation with short-circuiting of winding terminals and acceleration with 120-degree conduction control is adoptable. Other combinations are also applicable as a combination of the control method for applying the resistance to rotation and the control method for accelerating the rotation, as long as such combinations come within the scope defined by the appended claims.

The present invention may be embodied in many different forms. The present disclosure is to be considered as providing examples of the principles of the invention. A number of illustrative embodiments are described herein with the understanding that it is not intended to limit the invention to preferred embodiments described herein and/or illustrated herein.

### Reference Signs List

- A: vehicle
- CT: control device
- E: four-stroke engine body
- EU: engine unit
- SG: three-phase brushless motor
- 5: crankshaft
- 50: rotor position detection device
- 61: inverter
- 611-616: switching part

## Claims

1. A straddled vehicle (A) comprising an engine unit (EU), the engine unit (EU) comprising:
a four-stroke engine body (E) in which a high-load region (TH) and a low-load region (TL) occur during four strokes, the high-load region (TH) having a high load on rotation of a crankshaft (5), the low-load region (TL) having a lower load on rotation of the crankshaft (5) than that of the high-load region (TH);
a three-phase brushless motor (SG) drivable by a battery (14) provided in the straddled vehicle (A), the three-phase brushless motor (SG) being configured to start the four-stroke engine body (E) by driving the crankshaft (5) in forward rotation in response to reception of a start instruction, the three-phase brushless motor (SG) being configured to generate power by being rotated along with rotation of the crankshaft (5) after the four-stroke engine body (E) is started;
an inverter (61) including a plurality of switching parts (611-616) configured to control a current flowing between the battery (14) and the three-phase brushless motor (SG); and
a control device (CT) including a starter motor controller and a combustion controller, the starter motor controller being configured to control the plurality of switching parts (611-616) included in the inverter (61) to control the current flowing between the battery (14) and the three-phase brushless motor (SG), the combustion controller being configured to control a combustion operation of the four-stroke engine body (E),
the control device (CT) configured to
while the crankshaft (5) is in forward rotation after the combustion operation of the four-stroke engine body (E) is stopped, control the plurality of switching parts (611-616) such that a resistance is applied to the forward rotation of the crankshaft (5) by the three-phase brushless motor (SG), forcing the crankshaft (5) to stop in a compression stroke of the four-stroke engine body (E), and
in response to reception of the start instruction under a state where the crankshaft (5) is stopped, control the plurality of switching parts (611-616) so as to direct the three-phase brushless motor (SG) to start forward rotation of the crankshaft (5), the forward rotation being started from a position where the crankshaft (5) is stopped in the compression stroke,
wherein the low-load region (TL) is wider than the high-load region (TH) in the four strokes, and
wherein the control device (CT), in response to reception of a start instruction, is configured to control the three-phase brushless motor (SG) to
accelerate the rotation of the crankshaft (5) and, during at least part of a time period from when the crankshaft (5) starts the forward rotation to when the crankshaft (5) reaches the end of the compression stroke, continuously perform a control of limiting the output torque of the three-phase brushless motor (SG) so as to allow the crankshaft (5) to rotate with a torque lower than a maximum torque obtainable from the battery (14), and
after passing through the compression stroke, remove the limit put on the output torque of the three-phase brushless motor (SG) so as to cause the three-phase brushless motor (SG) to rotate with the maximum torque obtainable from the battery (14) and move the crankshaft (5) in forward rotation over the low-load region (TL) ranging from the expansion stroke to the compression stroke, until reaching the high-load region (TH) for a second time.

2. The straddled vehicle (A) according to any claim 1, wherein
the three-phase brushless motor (SG) is attached to the crankshaft (5) without interposition of a power transmission mechanism, wherein the power transmission mechanism is a belt, a chain, a gear, a speed reducer, or a speed increaser.

3. The straddled vehicle (A) according to claim 1 or 2, wherein
the control device (CT) is configured to:
while the crankshaft (5) is in forward rotation after the combustion operation of the four-stroke engine body (E) is stopped, perform a vector control on the three-phase brushless motor (SG) such that the resistance is applied to the forward rotation of the crankshaft (5) by the three-phase brushless motor (SG), forcing the crankshaft (5) to stop in the compression stroke of the four-stroke engine body (E); and
in response to reception of the start instruction under the state where the crankshaft (5) is stopped, control the plurality of switching parts (611-616) so as to direct the three-phase brushless motor (SG) to start forward rotation of the crankshaft (5) from the position where the crankshaft (5) is stopped.

4. The straddled vehicle (A) according to claim 1 or 2, wherein
the control device (CT) is configured to:
while the crankshaft (5) is in forward rotation after the combustion operation of the four-stroke engine body (E) is stopped, perform a phase control in which the plurality of switching parts (611-616) are rendered to conduct at advanced or delayed timings, such that the resistance is applied to the forward rotation of the crankshaft (5) by the three-phase brushless motor (SG), forcing the crankshaft (5) to stop in the compression stroke of the four-stroke engine body (E); and
in response to reception of the start instruction under the state where the crankshaft (5) is stopped, control the plurality of switching parts (611-616) so as to direct the three-phase brushless motor (SG) to start forward rotation of the crankshaft (5) from the position where the crankshaft (5) is stopped.

5. The straddled vehicle (A) according to claim 1 or 2, wherein
the three-phase brushless motor (SG) includes a plurality of windings (W) corresponding to three phases, and
the control device (CT) is configured to:
while the crankshaft (5) is in forward rotation after the combustion operation of the four-stroke engine body (E) is stopped, control the plurality of switching parts (611-616) such that terminals of the plurality of windings (W) are short-circuited, such that the resistance is applied to the forward rotation of the crankshaft (5) by the three-phase brushless motor (SG), forcing the crankshaft (5) to stop in the compression stroke of the four-stroke engine body (E); and
in response to reception of the start instruction under the state where the crankshaft (5) is stopped, control the plurality of switching parts (611-616) so as to direct the three-phase brushless motor (SG) to start forward rotation of the crankshaft (5) from the position where the crankshaft (5) is stopped.

6. The straddled vehicle (A) according to claim 3, wherein
the control device (CT) is configured to:
while the crankshaft (5) is in forward rotation after the combustion operation of the four-stroke engine body (E) is stopped, perform the vector control on the three-phase brushless motor (SG) such that the resistance is applied to the forward rotation of the crankshaft (5) by the three-phase brushless motor (SG); and
in a case where the start instruction is received while the crankshaft (5) is rotating with the resistance applied to the rotation of the crankshaft (5), perform the vector control on the three-phase brushless motor (SG) so as to accelerate the rotation of the crankshaft (5).

7. The straddled vehicle (A) according to any one of claims 1 to 6, wherein
the control device (CT) is configured to:
after the combustion operation of the four-stroke engine body (E) is stopped, based on the rotation speed of the crankshaft (5) and the position of the crankshaft (5), direct the three-phase brushless motor (SG) to operate such that the resistance is applied to the forward rotation of the crankshaft (5), forcing the crankshaft (5) to stop in the compression stroke of the four-stroke engine body(E).

8. The straddled vehicle (A) according to any one of claims 1 to 7, wherein
the control device (CT) is configured to:
for a predefined time period after starting the combustion operation of the four-stroke engine body (E) by driving the crankshaft (5) in forward rotation in response to reception of the start instruction, control the plurality of switching parts (611-616) so as to direct the three-phase brushless motor (SG) to accelerate the forward rotation of the crankshaft (5).

9. The straddled vehicle (A) according to claim 6 or 8, wherein
the control device (CT) is configured to:
in response to reception of the start instruction, perform the vector control on the three-phase brushless motor (SG) so as to drive the crankshaft (5) in forward rotation; and
for a predefined time period after starting the combustion operation of the four-stroke engine body (E), perform the vector control on the three-phase brushless motor (SG) so as to direct the three-phase brushless motor (SG) to accelerate the forward rotation of the crankshaft (5).

## Patentansprüche

1. Ein rittlings zu fahrendes Fahrzeug (A) mit einer Motoreinheit (EU), wobei die Motoreinheit (EU) folgende Merkmale aufweist:
einen Viertaktmotorkörper (E), in dem während vier Takten ein Hochlastbereich (TH) und ein Niedriglastbereich (TL) auftreten, wobei der Hochlastbereich (TH) eine hohe Last auf die Drehung einer Kurbelwelle (5) hat, der Niedriglastbereich (TL) eine niedrigere Last auf die Drehung der Kurbelwelle (5) als der Hochlastbereich (TH) hat;
einen dreiphasigen bürstenlosen Motor (SG), der durch eine Batterie (14) angetrieben werden kann, die in dem rittlings zu fahrenden Fahrzeug (A) vorgesehen ist, wobei der dreiphasige bürstenlose Motor (SG) dazu konfiguriert ist, den Viertaktmotorkörper (E) zu starten, indem die Kurbelwelle (5) ansprechend auf ein Empfangen eines Startbefehls in Vorwärtsdrehung angetrieben wird, wobei der dreiphasige bürstenlose Motor (SG) dazu konfiguriert ist, Leistung zu erzeugen, indem derselbe zusammen mit der Drehung der Kurbelwelle (5) gedreht wird, nachdem der Viertaktmotorkörper (E) gestartet wurde;
einen Wechselrichter (61), der eine Mehrzahl von Schaltteilen (611-616) umfasst, die dazu konfiguriert sind, einen Strom zu steuern, der zwischen der Batterie (14) und dem dreiphasigen bürstenlosen Motor (SG) fließt; und
eine Steuervorrichtung (CT), die eine Anlassermotorsteuerung und eine Verbrennungssteuerung umfasst, wobei die Anlassermotorsteuerung dazu konfiguriert ist, die Mehrzahl von Schaltteilen (611-616) zu steuern, die in dem Wechselrichter (61) beinhaltet sind, um den Strom zu steuern, der zwischen der Batterie (14) und dem dreiphasigen bürstenlosen Motor (SG) fließt, wobei die Verbrennungssteuerung dazu konfiguriert ist, einen Verbrennungsvorgang des Viertaktmotorkörpers (E) zu steuern,
wobei die Steuervorrichtung (CT) zu Folgendem konfiguriert ist:
während die Kurbelwelle (5) in Vorwärtsdrehung ist, nachdem der Verbrennungsvorgang des Viertaktmotorkörpers (E) gestoppt wurde, Steuern der Mehrzahl von Schaltteilen (611-616) derart, dass durch den dreiphasigen bürstenlosen Motor (SG) ein Widerstand auf die Vorwärtsdrehung der Kurbelwelle (5) ausgeübt wird, wodurch die Kurbelwelle (5) gezwungen wird, während eines Verdichtungstakts des Viertaktmotorkörpers (E) zu stoppen; und
ansprechend auf das Empfangen des Startbefehls in einem Zustand, in dem die Kurbelwelle (5) gestoppt ist, Steuern der Mehrzahl von Schaltteilen (611-616), um den dreiphasigen bürstenlosen Motor (SG) anzuweisen, eine Vorwärtsdrehung der Kurbelwelle (5) zu starten, wobei die Vorwärtsdrehung von einer Position aus gestartet wird, in der die Kurbelwelle (5) während des Verdichtungstakts gestoppt wurde,
wobei in den vier Takten der Niedriglastbereich (TL) breiter als der Hochlastbereich (TH) ist und
wobei die Steuervorrichtung (CT) ansprechend auf das Empfangen eines Startbefehls dazu konfiguriert ist, den dreiphasigen bürstenlosen Motor (SG) zu Folgendem zu steuern:
Beschleunigen der Drehung der Kurbelwelle (5) und, während zumindest eines Teils einer Zeitspanne zwischen dem Zeitpunkt, an dem die Kurbelwelle (5) die Vorwärtsdrehung startet, und dem Zeitpunkt, an dem die Kurbelwelle (5) das Ende des Verdichtungstakts erreicht, kontinuierliches Durchführen einer Begrenzungssteuerung des Ausgangsdrehmoments des dreiphasigen bürstenlosen Motors (SG), um es der Kurbelwelle (5) zu ermöglichen, sich mit einem Drehmoment zu drehen, das kleiner als ein maximales Drehmoment ist, das von der Batterie (14) erhalten werden kann, und
nach Durchlaufen des Verdichtungstakts, Aufheben der Begrenzung, die auf dem Ausgangsdrehmoment des dreiphasigen bürstenlosen Motors (SG) liegt, um zu bewirken, dass der dreiphasige bürstenlose Motor (SG) sich mit dem maximalen Drehmoment dreht, das von der Batterie (14) erhalten werden kann, und Bewegen der Kurbelwelle (5) in Vorwärtsdrehung über den Niedriglastbereich (TL), der von dem Arbeitstakt bis zu dem Verdichtungstakt reicht, bis der Hochlastbereich (TH) ein zweites Mal erreicht wird.

2. Das rittlings zu fahrende Fahrzeug (A) gemäß Anspruch 1, wobei
der dreiphasige bürstenlose Motor (SG) ohne Zwischenschaltung eines Kraftübertragungsmechanismus an der Kurbelwelle (5) angebracht ist, wobei der Kraftübertragungsmechanismus ein Riemen, eine Kette, ein Getrieberad, ein Drehzahlminderer oder ein Drehzahlerhöher ist.

3. Das rittlings zu fahrende Fahrzeug (A) gemäß Anspruch 1 oder 2, wobei
die Steuervorrichtung (CT) zu Folgendem konfiguriert ist:
während die Kurbelwelle (5) in Vorwärtsdrehung ist, nachdem der Verbrennungsvorgang des Viertaktmotorkörpers (E) gestoppt wurde, Durchführen einer Vektorsteuerung auf dem dreiphasigen bürstenlosen Motor (SG) derart, dass durch den dreiphasigen bürstenlosen Motor (SG) der Widerstand auf die Vorwärtsdrehung der Kurbelwelle (5) ausgeübt wird, wodurch die Kurbelwelle (5) gezwungen wird, während des Verdichtungstakts des Viertaktmotorkörpers (E) zu stoppen; und
ansprechend auf ein Empfangen des Startbefehls in dem Zustand, in dem die Kurbelwelle (5) gestoppt ist, Steuern der Mehrzahl von Schaltteilen (611-616), um den dreiphasigen bürstenlosen Motor (SG) anzuweisen, die Vorwärtsdrehung der Kurbelwelle (5) von der Position aus zu starten, in der die Kurbelwelle (5) gestoppt wurde.

4. Das rittlings zu fahrende Fahrzeug (A) gemäß Anspruch 1 oder 2, wobei
die Steuervorrichtung (CT) zu Folgendem konfiguriert ist:
während die Kurbelwelle (5) in Vorwärtsdrehung ist, nachdem der Verbrennungsvorgang des Viertaktmotorkörpers (E) gestoppt wurde, Durchführen einer Phasensteuerung, bei der die Mehrzahl von Schaltteilen (611-616) veranlasst wird, sich gemäß vorgezogenen oder verzögerten Zeitpunkten derart zu verhalten, dass der Widerstand durch den dreiphasigen bürstenlosen Motor (SG) auf die Vorwärtsdrehung der Kurbelwelle (5) ausgeübt wird, wodurch die Kurbelwelle (5) gezwungen wird, während eines Verdichtungstakts des Viertaktmotorkörpers (E) zu stoppen; und
ansprechend auf das Empfangen des Startbefehls in dem Zustand, in dem die Kurbelwelle (5) gestoppt ist, Steuern der Mehrzahl von Schaltteilen (611-616), um den dreiphasigen bürstenlosen Motor (SG) anzuweisen, eine Vorwärtsdrehung der Kurbelwelle (5) von der Position aus zu starten, in der die Kurbelwelle (5) gestoppt wurde.

5. Das rittlings zu fahrende Fahrzeug (A) gemäß Anspruch 1 oder 2, wobei
der dreiphasige bürstenlose Motor (SG) eine Mehrzahl von Wicklungen (W) aufweist, die drei Phasen entsprechen, und
die Steuervorrichtung (CT) zu Folgendem konfiguriert ist:
während die Kurbelwelle (5) in Vorwärtsdrehung ist, nachdem der Verbrennungsvorgang des Viertaktmotorkörpers (E) gestoppt wurde, Steuern der Mehrzahl von Schaltteilen (611-616) derart, dass Anschlüsse der Mehrzahl von Wicklungen (W) kurzgeschlossen werden, so dass durch den dreiphasigen bürstenlosen Motor (SG) der Widerstand auf die Vorwärtsdrehung der Kurbelwelle (5) ausgeübt wird, wodurch die Kurbelwelle (5) gezwungen wird, während des Verdichtungstakts des Viertaktmotorkörpers (E) zu stoppen; und
ansprechend auf das Empfangen des Startbefehls in dem Zustand, in dem die Kurbelwelle (5) gestoppt ist, Steuern der Mehrzahl von Schaltteilen (611-616), um den dreiphasigen bürstenlosen Motor (SG) anzuweisen, die Vorwärtsdrehung der Kurbelwelle (5) von der Position aus zu starten, in der die Kurbelwelle (5) gestoppt wurde.

6. Das rittlings zu fahrende Fahrzeug (A) gemäß Anspruch 3, wobei
die Steuervorrichtung (CT) zu Folgendem konfiguriert ist:
während die Kurbelwelle (5) in Vorwärtsdrehung ist, nachdem der Verbrennungsvorgang des Viertaktmotorkörpers (E) gestoppt wurde, Durchführen der Vektorsteuerung auf dem dreiphasigen bürstenlosen Motor (SG) derart, dass durch den dreiphasigen bürstenlosen Motor (SG) der Widerstand auf die Vorwärtsdrehung der Kurbelwelle (5) ausgeübt wird; und
falls der Startbefehl empfangen wird, während sich die Kurbelwelle (5) mit auf die Drehung der Kurbelwelle (5) ausgeübtem Widerstand dreht, Durchführen der Vektorsteuerung auf dem dreiphasigen bürstenlosen Motor (SG), um die Drehung der Kurbelwelle (5) zu beschleunigen.

7. Das rittlings zu fahrende Fahrzeug (A) gemäß einem der Ansprüche 1 bis 6, wobei
die Steuervorrichtung (CT) zu Folgendem konfiguriert ist:
nachdem der Verbrennungsvorgang des Viertaktmotorkörpers (E) gestoppt wurde, basierend auf der Drehzahl der Kurbelwelle (5) und der Position der Kurbelwelle (5), Anweisen des dreiphasigen bürstenlosen Motors (SG), so zu arbeiten, dass der Widerstand auf die Vorwärtsdrehung der Kurbelwelle (5) ausgeübt wird, wodurch die Kurbelwelle (5) gezwungen wird, während des Verdichtungstakts des Viertaktmotorkörpers (E) zu stoppen.

8. Das rittlings zu fahrende Fahrzeug (A) gemäß einem der Ansprüche 1 bis 7, wobei
die Steuervorrichtung (CT) zu Folgendem konfiguriert ist:
für eine vorbestimmte Zeitspanne nach Starten des Verbrennungsvorgangs des Viertaktmotorkörpers (E), indem die Kurbelwelle (5) ansprechend auf ein Empfangen des Startbefehls in Vorwärtsdrehung angetrieben wird, Steuern der Mehrzahl von Schaltteilen (611-616), um den dreiphasigen bürstenlosen Motor (SG) anzuweisen wird, die Vorwärtsdrehung der Kurbelwelle (5) zu beschleunigen.

9. Das rittlings zu fahrende Fahrzeug (A) gemäß Anspruch 6 oder 8, wobei
die Steuervorrichtung (CT) zu Folgendem konfiguriert ist:
ansprechend auf das Empfangen des Startbefehls, Durchführen der Vektorsteuerung auf dem dreiphasigen bürstenlosen Motor (SG), um die Kurbelwelle (5) in Vorwärtsdrehung anzutreiben; und
für eine vorbestimmte Zeitspanne nach Starten des Verbrennungsvorgangs des Viertaktmotorkörpers (E), Durchführen der Vektorsteuerung auf dem dreiphasigen bürstenlosen Motor (SG), um den dreiphasigen bürstenlosen Motor (SG) anzuweisen, die Vorwärtsdrehung der Kurbelwelle (5) zu beschleunigen.

## Revendications

1. Véhicule à selle (A) comprenant une unité de moteur (EU), l'unité de moteur (EU) comprenant:
un corps de moteur à quatre temps (E) dans lequel se produisent une zone de haute charge (TH) et une zone de faible charge (TL) pendant les quatre temps, la région de haute charge (TH) présentant une haute charge sur la rotation d'un vilebrequin (5), la région à faible charge (TL) présentant une charge sur la rotation du vilebrequin (5) inférieure à celle de la région à haute charge (TH);
un moteur triphasé sans balais (SG) pouvant être entraîné par une batterie (14) prévue dans le véhicule à selle (A), le moteur triphasé sans balais (SG) étant configuré pour faire démarrer le corps de moteur à quatre temps (E) en entraînant le vilebrequin (5) en rotation vers l'avant en réponse à la réception d'une instruction de démarrage, le moteur triphasé sans balais (SG) étant configuré pour générer de l'énergie en étant mis en rotation ensemble avec la rotation du vilebrequin (5) après que soit démarré le corps de moteur à quatre temps (E);
un onduleur (61) comportant une pluralité de pièces de commutation (611 à 616) configurées pour commander un courant circulant entre la batterie (14) et le moteur triphasé sans balais (SG); et
un dispositif de commande (CT) comportant un moyen de commande de moteur de démarrage et un moyen de commande de combustion, le moyen de commande de moteur de démarrage étant configuré pour commander la pluralité de pièces de commutation (611 à 616) incluses dans l'onduleur (61) pour commander le courant circulant entre la batterie (14) et le moteur triphasé sans balais (SG), le moyen de commande de combustion étant configuré pour commander une opération de combustion du corps de moteur à quatre temps (E),
le dispositif de commande (CT) étant configuré pour
tandis que le vilebrequin (5) est en rotation vers l'avant après que l'opération de combustion du corps de moteur à quatre temps (E) soit arrêtée, commander la pluralité de pièces de commutation (611 à 616) de sorte qu'une résistance à la rotation vers l'avant du vilebrequin (5) soit appliquée par le moteur triphasé sans balais (SG), forçant le vilebrequin (5) à s'arrêter pendant un temps de compression du corps de moteur à quatre temps (E), et
en réponse à la réception de l'instruction de démarrage dans un état où le vilebrequin (5) est arrêté, commander la pluralité de pièces de commutation (611 à 616) de manière à donner instruction au moteur triphasé sans balais (SG) de démarrer la rotation vers l'avant du vilebrequin (5), la rotation vers l'avant étant démarrée à partir d'une position où le vilebrequin (5) est arrêté pendant le temps de compression,
dans lequel la région à faible charge (TL) est plus large que la région à haute charge (TH) pendant les quatre temps, et
dans lequel le dispositif de commande (CT) est configuré pour commander, en réponse à la réception d'une instruction de démarrage, le moteur triphasé sans balais (SG) pour
accélérer la rotation du vilebrequin (5) et, pendant au moins une partie d'un laps de temps entre le moment où le vilebrequin (5) commence la rotation vers l'avant et le moment où le vilebrequin (5) atteint la fin du temps de compression, effectuer en continu une commande de limitation du couple de sortie du moteur triphasé sans balais (SG) de manière à permettre que le vilebrequin (5) tourne avec un couple inférieur à un couple maximal pouvant être obtenu à partir de la batterie (14), et
après avoir passé le temps de compression, éliminer la limite placée sur le couple de sortie du moteur triphasé sans balais (SG) de manière à faire tourner le moteur triphasé sans balais (SG) avec le couple maximal pouvant être obtenu à partir de la batterie (14) et déplacer le vilebrequin (5) en rotation vers l'avant sur la région à faible charge (TL) allant du temps d'expansion au temps de compression, jusqu'à atteindre la région à haute charge (TH) une deuxième fois.

2. Véhicule à selle (A) selon la revendication 1, dans lequel
le moteur triphasé sans balais (SG) est fixé au vilebrequin (5) sans interposition d'un mécanisme de transmission de puissance, où le mécanisme de transmission de puissance est une courroie, une chaîne, un engrenage, un réducteur de vitesse ou un multiplicateur de vitesse.

3. Véhicule à selle (A) selon la revendication 1 ou 2, dans lequel
le dispositif de commande (CT) est configuré pour:
tandis que le vilebrequin (5) est en rotation vers l'avant après que l'opération de combustion du corps de moteur à quatre temps (E) soit arrêtée, effectuer un contrôle vectoriel sur le moteur triphasé sans balais (SG) de sorte que la résistance soit appliquée à la rotation vers l'avant du vilebrequin (5) par le moteur triphasé sans balais (SG), forçant le vilebrequin (5) à s'arrêter pendant le temps de compression du corps de moteur à quatre temps (E); et
en réponse à la réception de l'instruction de démarrage dans l'état où le vilebrequin (5) est arrêté, commander la pluralité de pièces de commutation (611 à 616) de manière à donner instruction au moteur sans balais triphasé (SG) de démarrer la rotation vers l'avant du vilebrequin (5) à partir de la position où le vilebrequin (5) est arrêté.

4. Véhicule à selle (A) selon la revendication 1 ou 2, dans lequel le dispositif de commande (CT) est configuré pour:
tandis que le vilebrequin (5) est en rotation vers l'avant après que l'opération de combustion du corps de moteur à quatre temps (E) soit arrêtée, effectuer une commande de phase dans laquelle la pluralité de pièces de commutation (611 à 616) sont amenées à se conduire selon des temporisations avancées ou retardées, de sorte que la résistance soit appliquée à la rotation vers l'avant du vilebrequin (5) par le moteur triphasé sans balais (SG), forçant le vilebrequin (5) à s'arrêter pendant le temps de compression du corps du moteur à quatre temps (E); et
en réponse à la réception de l'instruction de démarrage dans l'état où le vilebrequin (5) est arrêté, commander la pluralité de pièces de commutation (611 à 616) de manière à donner instruction au moteur sans balais triphasé (SG) de démarrer la rotation vers l'avant du vilebrequin (5) à partir de la position où le vilebrequin (5) est arrêté.

5. Véhicule à selle (A) selon la revendication 1 ou 2, dans lequel
le moteur triphasé sans balais (SG) comporte une pluralité d'enroulements (W) correspondant à trois phases, et
le dispositif de commande (CT) est configuré pour:
tandis que le vilebrequin (5) est en rotation vers l'avant après que l'opération de combustion du corps de moteur à quatre temps (E) soit arrêtée, commander la pluralité de pièces de commutation (611 à 616) de sorte que les bornes de la pluralité d'enroulements (W) soient court-circuitées, de sorte que la résistance soit appliquée à la rotation vers l'avant du vilebrequin (5) par le moteur triphasé sans balais (SG), forçant le vilebrequin (5) à s'arrêter pendant le temps de compression du corps du moteur à quatre temps (E); et
en réponse à la réception de l'instruction de démarrage dans l'état où le vilebrequin (5) est arrêté, commander la pluralité de pièces de commutation (611 à 616) de manière à donner instruction au moteur sans balais triphasé (SG) de démarrer la rotation vers l'avant du vilebrequin (5) à partir de la position où le vilebrequin (5) est arrêté.

6. Véhicule à selle (A) selon la revendication 3, dans lequel le dispositif de commande (CT) est configuré pour:
tandis que le vilebrequin (5) est en rotation vers l'avant après que l'opération de combustion du corps de moteur à quatre temps (E) soit arrêtée, effectuer le contrôle vectoriel sur le moteur triphasé sans balais (SG) de sorte que la résistance soit appliquée à la rotation vers l'avant du vilebrequin (5) par le moteur triphasé sans balais (SG); et
au cas où l'instruction de démarrage est reçue tandis que le vilebrequin (5) tourne avec la résistance appliquée à la rotation du vilebrequin (5), effectuer le contrôle vectoriel sur le moteur triphasé sans balais (SG) de manière à accélérer la rotation du vilebrequin (5).

7. Véhicule à selle (A) selon l'une quelconque des revendications 1 à 6, dans lequel
le dispositif de commande (CT) est configuré pour:
après que l'opération de combustion du corps du moteur à quatre temps (E) soit arrêtée, sur base de la vitesse de rotation du vilebrequin (5) et de la position du vilebrequin (5), donner instruction au moteur triphasé sans balais (SG) de fonctionner de sorte que la résistance soit appliquée à la rotation vers l'avant du vilebrequin (5), forçant le vilebrequin (5) à s'arrêter pendant le temps de compression du corps de moteur à quatre temps (E).

8. Véhicule à selle (A) selon l'une quelconque des revendications 1 à 7, dans lequel
le dispositif de commande (CT) est configuré pour:
pendant un laps de temps prédéfini après le démarrage de l'opération de combustion du corps de moteur à quatre temps (E) en entraînant le vilebrequin (5) en rotation vers l'avant en réponse à la réception de l'instruction de démarrage, commander la pluralité de pièces de commutation (611 à 616) de manière à donner instruction au moteur triphasé sans balais (SG) d'accélérer la rotation vers l'avant du vilebrequin (5).

9. Véhicule à selle (A) selon la revendication 6 ou 8, dans lequel le dispositif de commande (CT) est configuré pour:
en réponse à la réception de l'instruction de démarrage, effectuer le contrôle vectoriel sur le moteur triphasé sans balais (SG) de manière à entraîner le vilebrequin (5) en rotation vers l'avant; et
pendant un laps de temps prédéfini après le démarrage de l'opération de combustion du corps du moteur à quatre temps (E), effectuer le contrôle vectoriel sur le moteur triphasé sans balais (SG) de manière à donner instruction au moteur triphasé sans balais (SG) d'accélérer la rotation vers l'avant du vilebrequin (5).
